# EUROPEAN PATENT APPLICATION

(11) **EP 4 415 403 A1**
(43) Date of publication of application: **14.08.2024**
(21) Application number: 22889208.9
(22) Date of filing: 28.10.2022
(51) Int. Cl.: H04W 8/18

(54) **DATA COLLECTION METHOD AND COMMUNICATION APPARATUS**

(30) Priority: 03.11.2021 CN 202111294132
(71) Applicant: Huawei Technologies Co., Ltd., Shenzhen, Guangdong 518129 (CN)
(72) Inventor: PAN, Qi, Shenzhen, Guangdong 518129 (CN); HUANG, Zhenglei, Shenzhen, Guangdong 518129 (CN)
(74) Representative: Körber, Martin Hans
(86) International application number: PCT/CN2022/128388
(87) International publication number: WO 2023/078183

(57) **Abstract**

Embodiments of this application provide a data collection method and a communication apparatus. The method includes: receiving, from a terminal device, terminal device-side data of a service and slice information corresponding to the service; and determining, based on the slice information and the terminal device-side data of the service, terminal device-side data corresponding to the slice information. In this solution, when reporting the terminal device-side data of the service, the terminal device also reports the slice information corresponding to the service, so that the terminal device-side data can be associated with the slice information, and collection of the per-slice terminal device-side data is implemented.

## Description

### CROSS-REFERENCE TO RELATED APPLICATIONS

This application claims priority to Chinese Patent Application No. 202111294132.6, filed with the China National Intellectual Property Administration on November 3, 2021 and entitled "DATA COLLECTION METHOD AND COMMUNICATION APPARATUS", which is incorporated herein by reference in its entirety.

### TECHNICAL FIELD

This application relates to the field of communication technologies, and in particular, to a data collection method and a communication apparatus.

### BACKGROUND

Currently, in a plurality of application scenarios, data of a terminal device needs to be collected, so that corresponding analysis can be performed based on the collected terminal device-side data.

However, how to collect the terminal device-side data needs to be resolved.

### SUMMARY

Embodiments of this application provide a data collection method and a communication apparatus, to implement collection of per-slice terminal device-side data.

According to a first aspect, an embodiment of this application provides a data collection method. The method may be performed by a data collection network element or a module (for example, a chip) used in the data collection network element. For example, the data collection network element performs the method. The method includes: The data collection network element receives, from a terminal device, terminal device-side data of a service and slice information corresponding to the service; and the data collection network element determines, based on the slice information and the terminal device-side data of the service, terminal device-side data corresponding to the slice information.

In the foregoing solution, when reporting the terminal device-side data of the service, the terminal device also reports the slice information corresponding to the service, so that the terminal device-side data can be associated with the slice information, and collection of the per-slice terminal device-side data is implemented.

In a possible implementation method, the data collection network element sends first indication information to the terminal device, where the first indication information indicates to report the slice information corresponding to the service, or the first indication information indicates to collect and report the slice information corresponding to the service.

According to the foregoing solution, the terminal device may be explicitly indicated to collect the slice information corresponding to the service, and the terminal device may be accurately notified to collect the slice information corresponding to the service.

In a possible implementation method, the data collection network element receives the first indication information from an application service provider; or receives second indication information from an application service provider, and determines the first indication information based on the second indication information, where the second indication information indicates to report the slice information corresponding to the service, or the second indication information indicates to collect and report the slice information corresponding to the service.

According to the foregoing solution, the data collection network element determines, based on an indication of the application service provider, to send the first indication information to the terminal device, so that the per-slice terminal device-side data can be determined based on a requirement of the application service provider, and this helps an operator and the application service provider analyze the per-slice terminal device-side data.

In a possible implementation method, the data collection network element sends the slice information to the terminal device.

According to the foregoing solution, the data collection network element sends the slice information to the terminal device, to specify the terminal device to perform terminal device-side data collection on the service in the specific slice information, to help analyze a specific slice.

In a possible implementation method, the data collection network element receives second indication information from an application service provider, where the second indication information indicates to report the slice information corresponding to the service, or the second indication information indicates to collect and report the slice information corresponding to the service; and determines the slice information based on the second indication information.

According to the foregoing solution, the data collection network element determines, based on an indication of the application service provider, the slice information on which data collection needs to be performed, so that the per-slice terminal device-side data can be determined based on a requirement of the application service provider, and this helps an operator and the application service provider analyze the per-slice terminal device-side data.

In a possible implementation method, the data collection network element receives third indication information from the application service provider, where the third indication information indicates to collect the per-slice terminal device-side data.

According to the foregoing solution, the data collection network element determines the per-slice terminal device-side data based on the requirement of the application service provider, and this helps the operator and the application service provider analyze the per-slice terminal device-side data.

In a possible implementation method, the terminal device-side data includes quality of experience.

According to a second aspect, an embodiment of this application provides a data collection method. The method may be performed by a terminal device or a module (for example, a chip) used in the terminal device. For example, the terminal device performs the method. The method includes: The terminal device receives a data collection metric of a service from a data collection network element, where the data collection metric indicates to-be-collected terminal device-side data of the service; and the terminal device sends, to the data collection network element, the terminal device-side data of the service and slice information corresponding to the service.

In the foregoing solution, when reporting the terminal device-side data of the service, the terminal device also reports the slice information corresponding to the service, so that the terminal device-side data can be associated with the slice information, and collection of the per-slice terminal device-side data is implemented.

In a possible implementation method, the slice information and the terminal device-side data of the service are used to determine terminal device-side data corresponding to the slice information.

In a possible implementation method, the terminal device receives first indication information from the data collection network element, where the first indication information indicates to report the slice information corresponding to the service, or the first indication information indicates to collect and report the slice information corresponding to the service; and determines, based on the first indication information, the slice information corresponding to the service.

According to the foregoing solution, the terminal device may be explicitly indicated to collect the slice information corresponding to the service, and the terminal device may be accurately notified to collect the slice information corresponding to the service.

In a possible implementation method, the terminal device receives the slice information from the data collection network element.

According to the foregoing solution, the data collection network element sends the slice information to the terminal device, to specify the terminal device to collect and report the terminal device-side data of the service carried in the specific slice information, to help perform data collection and analysis on a specific slice.

In a possible implementation method, the terminal device receives first indication information and the slice information from the data collection network element, where the first indication information indicates to report the slice information corresponding to the service, or the first indication information indicates to collect and report the slice information corresponding to the service, and the slice information indicates the terminal device to collect the terminal device-side data of the service carried on a slice corresponding to the slice information. For example, when the terminal device receives slice information 1 and the first indication information, and the terminal device has a service 1 corresponding to the slice information 1 and a service 2 corresponding to slice information 2, the terminal device collects and reports the slice information 1 and terminal device-side data of the service 1, and does not collect and report the slice information 2 and terminal device-side data of the service 2.

In a possible implementation method, the terminal device-side data includes quality of experience.

According to a third aspect, an embodiment of this application provides a data collection method. The method may be performed by a data collection network element or a module (for example, a chip) used in the data collection network element. For example, the data collection network element performs the method. The method includes: The data collection network element sends slice information and a data collection metric of a service to a terminal device, where the data collection metric indicates to-be-collected terminal device-side data of the service; the data collection network element receives the terminal device-side data of the service from the terminal device, where the service corresponds to the slice information; and the data collection network element determines, based on the slice information and the terminal device-side data of the service, terminal device-side data corresponding to the slice information.

In the foregoing solution, the data collection network element sends the slice information to the terminal device, to specify the terminal device to collect the terminal device-side data of the service carried in the specific slice information, to help analyze a specific slice.

In a possible implementation, first slice information that carries the service is received from the terminal device, where the first slice information is included in the slice information.

In a possible implementation, the data collection network element receives indication information from an application service provider, where the indication information indicates to collect the per-slice terminal device-side data.

According to the foregoing solution, the data collection network element determines, based on an indication of an application server, the slice information on which data collection needs to be performed, so that the per-slice terminal device-side data can be determined based on a requirement of the application service provider, and this helps an operator and the application service provider analyze the per-slice terminal device-side data.

In a possible implementation method, the data collection network element determines the slice information based on the indication information.

In a possible implementation method, the terminal device-side data includes quality of experience.

According to a fourth aspect, an embodiment of this application provides a data collection method. The method may be performed by a terminal device or a module (for example, a chip) used in the terminal device. For example, the terminal device performs the method. The method includes: The terminal device receives slice information and a data collection metric of a service from a data collection network element, where the data collection metric indicates to-be-collected terminal device-side data of the service; and the terminal device sends the terminal device-side data of the service to the data collection network element. In the foregoing solution, the terminal device collects and reports the specified per-slice terminal device-side data based on the slice information from the data collection network element.

In a possible implementation method, when first slice information that carries the service is included in the slice information, the terminal device sends the terminal device-side data of the service to the data collection network element.

According to the foregoing solution, the terminal device needs to first determine whether the slice information (that is, the first slice information) that carries the service is included in the slice information sent by the data collection network element. If the slice information is included in the slice information sent by the data collection network element, the terminal device sends the terminal device-side data of the service to the data collection network element. This helps correctly report the terminal device-side data.

In a possible implementation method, the terminal device sends, to the data collection network element, the first slice information that carries the service.

In a possible implementation method, the terminal device-side data of the service is used to determine terminal device-side data corresponding to the slice information.

In a possible implementation method, the terminal device-side data includes quality of experience.

According to a fifth aspect, an embodiment of this application provides a data collection method. The method may be performed by a data collection network element or a module (for example, a chip) used in the data collection network element. For example, the data collection network element performs the method. The method includes: receiving terminal device-side data of a service from a terminal device; and determining, based on a correspondence between the service and slice information and the terminal device-side data of the service, terminal device-side data corresponding to the slice information.

In the foregoing solution, the data collection network element receives the terminal device-side data that is of the service and that is reported by the terminal device, and the data collection network element further determines the correspondence between the service and slice information, so that the data collection network element can associate the terminal device-side data with the slice information, to implement collection of the per-slice terminal device-side data.

In a possible implementation method, the data collection network element receives indication information from an application service provider, where the indication information indicates to collect the per-slice terminal device-side data.

According to the foregoing solution, the data collection network element determines the per-slice terminal device-side data based on a requirement of the application service provider, to help the application service provider perform slice analysis.

In a possible implementation method, the data collection network element receives the correspondence between the service and the slice information from a policy control network element.

In a possible implementation method, the terminal device-side data includes quality of experience.

According to a sixth aspect, an embodiment of this application provides a communication apparatus. The apparatus may be a data collection network element or a module (for example, a chip) used in the data collection network element. The apparatus has a function of implementing any implementation method of the first aspect, the third aspect, or the fifth aspect. The function may be implemented by hardware, or may be implemented by hardware executing corresponding software. The hardware or the software includes one or more modules corresponding to the function.

According to a seventh aspect, an embodiment of this application provides a communication apparatus. The apparatus may be a terminal device or a module (for example, a chip) used in the terminal device. The apparatus has a function of implementing any implementation method of the second aspect or the fourth aspect. The function may be implemented by hardware, or may be implemented by hardware executing corresponding software. The hardware or the software includes one or more modules corresponding to the function.

According to an eighth aspect, an embodiment of this application provides a communication apparatus, including a processor coupled to a memory. The processor is configured to invoke a program stored in the memory, to perform any implementation method of the first aspect to the fifth aspect. The memory may be located inside or outside the apparatus. In addition, there may be one or more processors.

According to a ninth aspect, an embodiment of this application provides a communication apparatus, including a processor and a memory. The memory is configured to store computer instructions; and when the apparatus runs, the processor executes the computer instructions stored in the memory, so that the apparatus performs any implementation method in the first aspect to the fifth aspect.

According to a tenth aspect, an embodiment of this application provides a communication apparatus, including units or means (means) configured to perform steps of any implementation method in the first aspect to the fifth aspect.

According to an eleventh aspect, an embodiment of this application provides a communication apparatus, including a processor and an interface circuit. The processor is configured to communicate with another apparatus through the interface circuit, and perform any implementation method in the first aspect to the fifth aspect. There are one or more processors.

According to a twelfth aspect, an embodiment of this application further provides a computer-readable storage medium. The computer-readable storage medium stores instructions, and when the instructions are run on a communication apparatus, any implementation method in the first aspect to the fifth aspect is performed.

According to a thirteenth aspect, an embodiment of this application further provides a computer program product. The computer program product includes a computer program or instructions, and when the computer program or the instructions are run by a communication apparatus, any implementation method in the first aspect to the fifth aspect is performed.

According to a fourteenth aspect, an embodiment of this application further provides a chip system, including a processor, configured to perform any implementation method in the first aspect to the fifth aspect.

According to a fifteenth aspect, an embodiment of this application further provides a communication system, including a data collection network element configured to perform any implementation method of the first aspect and a terminal device configured to perform any implementation method of the second aspect.

According to a sixteenth aspect, an embodiment of this application further provides a communication system, including a data collection network element configured to perform any implementation method of the third aspect and a terminal device configured to perform any implementation method of the fourth aspect.

According to a seventeenth aspect, an embodiment of this application further provides a communication system, including a terminal device and a data collection network element. The terminal device is configured to: send, to the data collection network element, terminal device-side data of a service and slice information corresponding to the service; and determine, based on the slice information and the terminal device-side data of the service, terminal device-side data corresponding to the slice information. The data collection network element is configured to perform any implementation method of the fifth aspect.

### BRIEF DESCRIPTION OF DRAWINGS

FIG. 1 is a schematic of a 5G network architecture based on a service-oriented architecture;
FIG. 2 is a schematic of a reference architecture for data collection and reporting formulated in R17 work;
FIG. 3 is a schematic of a 5G media streaming architecture;
FIG. 4 is a schematic of a 5GMSd architecture;
FIG. 5(a) is a schematic flowchart of a data collection method according to an embodiment of this application;
FIG. 5(b) is a schematic flowchart of a data collection method according to an embodiment of this application;
FIG. 5(c) is a schematic flowchart of a data collection method according to an embodiment of this application;
FIG. 6 is a schematic flowchart of a data collection method according to an embodiment of this application;
FIG. 7 is a schematic flowchart of a data collection method according to an embodiment of this application;
FIG. 8 is a schematic flowchart of a data collection method according to an embodiment of this application;
FIG. 9 is a diagram of a communication apparatus according to an embodiment of this application;
FIG. 10 is a diagram of a communication apparatus according to an embodiment of this application; and
FIG. 11 is a diagram of a structure of a terminal device according to an embodiment of this application.

### DESCRIPTION OF EMBODIMENTS

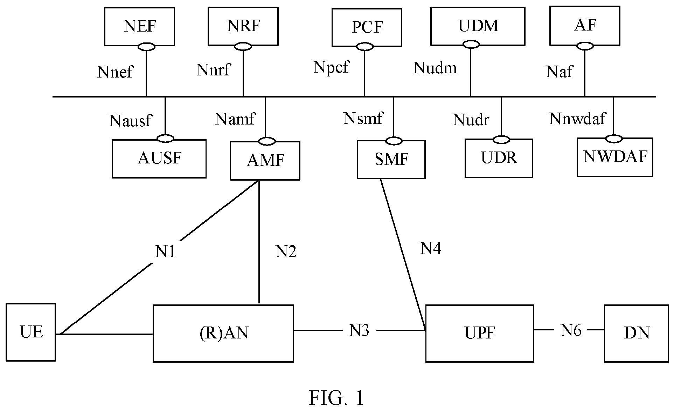

FIG. 1 is a schematic of a 5G network architecture based on a service-oriented architecture. The 5G network architecture shown in FIG. 1 may include a terminal device, an access network, and a core network. The terminal device accesses a data network (data network, DN) through the access network and the core network.

The terminal device may be user equipment (user equipment, UE), a mobile station, a mobile terminal, or the like. The terminal device may be widely used in various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, smart grid, smart furniture, smart office, a smart wearable device, smart transportation, and smart city. The terminal device may be a mobile phone, a tablet computer, a computer having wireless sending and receiving functions, a wearable device, a vehicle, an urban aerial vehicle (for example, an unmanned aerial vehicle or a helicopter), a ship, a robot, a robot arm, a smart home device, or the like. The following uses UE as an example of the terminal device for description. UE that appears anywhere subsequently may alternatively be replaced with the terminal device or another example of the terminal device.

The access network is configured to implement an access-related function, may provide a network access function for an authorized user in a specific area, and can determine transmission links of different quality based on a user level, a service requirement, and the like, to transmit user data. The access network forwards a control signal and user data between the UE and the core network. The access network may include an access network device. The access network device may be a device that provides access for the UE, and may include a radio access network (radio access network, RAN) device and a wireline access network (wireline access network, WAN) device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of devices having a base station function may be different. For example, in a 5G system, the device is referred to as a RAN or a next-generation node base station (next-generation Node base station, gNB). In a long term evolution (long term evolution, LTE) system, the device is referred to as an evolved NodeB (evolved NodeB, eNB or eNodeB).

The access network device and the UE may be located at fixed locations, or may be mobile. The access network device and the UE may be deployed on land, including an indoor or outdoor device, a handheld device, or a vehicle-mounted device; may be deployed on a water surface; or may be deployed on an airplane, a balloon, and an artificial satellite in the air. An application scenario of the access network device and the UE is not limited in embodiments of this application.

The core network is responsible for maintaining subscription data of a mobile network, and provides functions such as session management, mobility management, policy management, and security authentication for the UE. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, a user plane function (user plane function, UPF) network element, and a network data analytics function (Network Data Analytics Function, NWDAF) network element.

The AMF network element is mainly responsible for mobility management in a mobile network, such as user location update, user network registration, and user handover.

The SMF network element is mainly responsible for session management in the mobile network, such as session establishment, modification, and release. A specific function is, for example, allocating an internet protocol (internet protocol, IP) address to a user, or selecting a UPF that provides a packet forwarding function.

The UPF network element is mainly responsible for user data forwarding and receiving, and may receive user data from the data network, and transmit the user data to the UE through the access network device; or may receive user data from the UE through the access network device, and forward the user data to the data network.

The UDM network element includes functions such as subscription data management and user access authorization.

The UDR network element includes functions of storage and retrieval of subscription data, policy data, application data, and other types of data.

The NEF network element is mainly configured to support capability and event exposure.

The AF network element transfers a requirement of an application side on a network side, for example, a QoS requirement or user status event subscription. The AF may be a third-party function entity, or may be an operator-deployed application service, for example, an IP multimedia subsystem (IP Multimedia Subsystem, IMS) voice call service.

The PCF network element mainly supports providing a unified policy framework to control network behavior and providing a policy rule for a control layer network function, and is responsible for obtaining user subscription information related to a policy decision. The PCF network element may provide a policy, for example, a QoS policy or a slice selection policy, for the AMF network element and the SMF network element.

The NRF network element may be configured to provide a network element discovery function, and provide, based on a request of another network element, network element information corresponding to a network element type. The NRF further provides a network element management service, for example, network element registration, update, and deregistration, and network element status subscription and push.

The AUSF network element is responsible for authenticating the UE and verifying validity of the UE.

The NWDAF network element provides functions such as network data collection and analysis based on technologies such as big data and artificial intelligence.

A plurality of services may be deployed on the DN, and the DN may provide a service such as a data service and/or voice service for the UE. For example, the DN is a private network of a smart factory, a sensor installed in a workshop of the smart factory may be the UE, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the UE, and the mobile phone or the computer of the employee may access information, data resources, and the like on the internal office network of the company.

The AF network element, the UDM network element, the UDR network element, the PCF network element, the SMF network element, the AMF network element, the NRF network element, the AUSF network element, the NEF network element, the UPF network element, and the NWDAF network element may also be respectively referred to as an AF, a UDM, a UDR, a PCF, an SMF, an AMF network element, an NRF, an AUSF, an NEF, a UPF, and an NWDAF for short.

In FIG. 1, Nausf, Nnef, Nnfr, Namf, Npcf, Nsmf, Nudm, Nudr, Naf and Nnwdaf are service-oriented interfaces provided by the AUSF, NEF, NRF, AMF, PCF, SMF, UDM, UDR, AF and NWDAF respectively, and are configured to invoke corresponding service-oriented operations. N1, N2, N3, N4, and N6 are interface sequence numbers. Meanings of the interface sequence numbers are as follows.
(1) N1 represents an interface between the AMF and the UE, and may be configured to transfer non-access stratum (non-access stratum, NAS) signaling (for example, including a QoS rule from the AMF) to the UE, and the like.
(2) N2 represents an interface between the AMF and the access network device, and may be configured to transfer radio bearer control information from a core network side to the access network device, and the like.
(3) N3 represents an interface between the access network device and the UPF, and may mainly be configured to transfer uplink and downlink user plane data between the access network device and the UPF.
(4) N4 represents an interface between the SMF and the UPF, and may be configured to transfer information between a control plane and a user plane, including delivering a forwarding rule, a QoS rule, a traffic statistics rule, and the like from the control plane to the user plane, and reporting user plane information.
(5) N6 represents an interface between the UPF and the DN, and is configured to transfer uplink and downlink user data flows between the UPF and the DN.

It may be understood that the foregoing network element or function may be a network element in a hardware device, a software function running on dedicated hardware, or a virtualized function instantiated on a platform (for example, a cloud platform). In a possible implementation method, the foregoing network element or function may be implemented by one device, may be jointly implemented by a plurality of devices, or may be one function module in one device. This is not specifically limited in embodiments of this application.

To obtain UE-side data, a general user-side data collection and reporting architecture is proposed in R17 of 3GPP SA4. In this way, the UE-side data is collected and open to another network element or a third-party entity such as the NWDAF through the AF for intelligent analysis of the UE-side data and providing a better network service for the UE based on an analysis result of the UE-side data. For example, resource pre-scheduling is provided for the UE before handover based on UE mobility information, to ensure continuity of the network service for the UE.

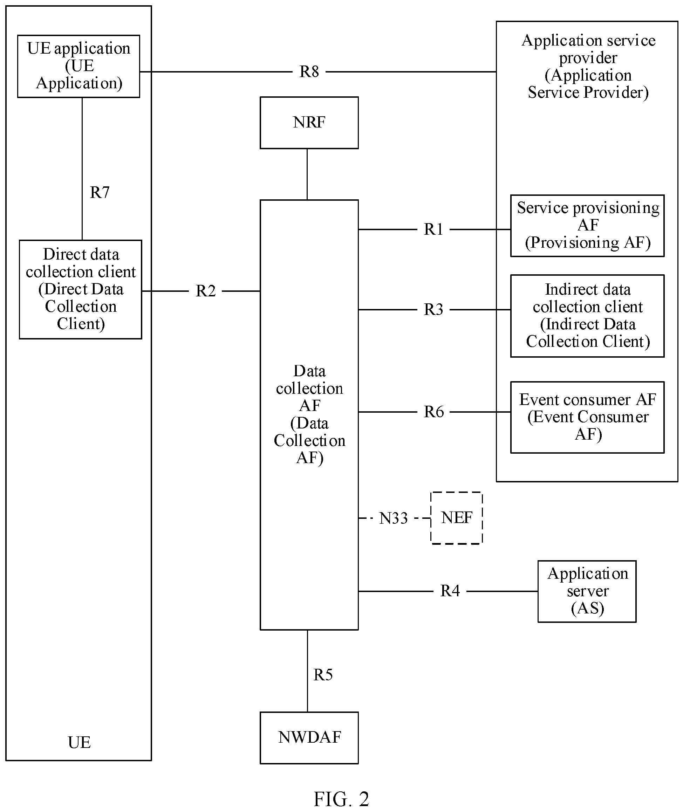

FIG. 2 is a schematic of a reference architecture for data collection and reporting formulated in R17 work. The UE-side data may be quality of experience (quality of experience, QoE) of a service corresponding to the UE or other data. This is not limited herein. The UE-side data indicates data obtained from the UE. For example, the UE-side data may be referred to as UE-side data or UE data (UE data).

A data collection AF (Data Collection AF, DCAF) may receive, from an application service provider (Application Service Provider, ASP), configuration information used to configure a data collection and reporting function. Specifically, a service provisioning AF (Provisioning AF) in the ASP may interact with the DCAF, to enable the data collection and reporting function. Then, the DCAF may generate data collection and reporting configuration information, send the data collection and reporting configuration information to a data collection client side (including a direct data collection client (Direct Data Collection Client, DDCC), an indirect data collection client (Indirect Data Collection Client, IDCC), and an application server (Application Server, AS)), and receive a data collection report reported by the data collection client. Then, the DCAF processes data in the data collection report, for example, performs format conversion, data anonymization, and data aggregation, and sends, based on a subscription request from another network element or a third-party entity, the processed UE-side data to the subscription network element or the third-party entity.

The direct data collection client (DDCC) refers to a data collection function entity on the UE side. The DDCC can receive the data collection and reporting configuration information from the DCAF side through an R2 interface, collect and report data based on the configuration information, and send the collected UE-side data to the DCAF through the R2 interface. The DDCC may be at an operating system layer in the UE. To be specific, different applications may share one DDCC; or the DDCC is a part of each application, that is, each application has an independent DDCC, and the DDCC may be a function entity integrated in an APP. This specifically depends on function implementation, and is not limited herein.

A UE application (UE Application) can share the related UE-side data with the DDCC through an R7 interface.

The application service provider (ASP) can receive the UE-side data from the UE application through an R8 interface. The R8 interface is implemented only at an application layer. It is assumed that there is an indirect data collection client (IDCC) in the ASP, and the IDCC sends UE-side data collected through the application layer to the DCAF through an R3 interface. Before that, the IDCC also receives the data collection and reporting configuration information from the DCAF through the R3 interface.

The application server (AS) may receive the data collection and reporting configuration information from the DCAF through an R6 interface, collect data based on the data collection and reporting configuration information, to obtain a data collection report, and send the data collection report to the DCAF through the R6 interface, where the data collection report may include, for example, access log information of the application server.

The NWDAF may subscribe to and receive UE-side data from the DCAF through an R5 interface, and then analyze the UE-side data.

The ASP may also obtain a data result collected by the DCAF. For example, an event consumer AF (Event Consumer AF) in the ASP may subscribe to the access log information of the application server through the R6 interface, and receive the access log information of the application server from the DCAF.

The general data collection and reporting architecture shown in FIG. 2 is compatible with a 5G media streaming (5G Media Streaming, 5GMS) architecture in R16. Specifically, the 5GMS architecture may be used as a specific instantiation architecture of the general data collection and reporting architecture in the media field.

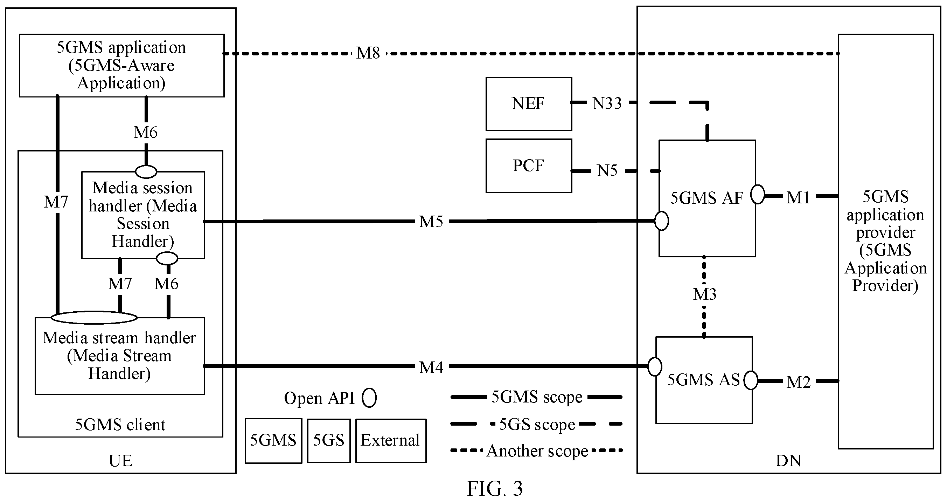

FIG. 3 is a schematic of a 5G media streaming architecture. The architecture is a new 5G media streaming architecture designed for 5GMS services in 3GPP SA4 Rel-16. The 5GMS architecture mainly includes a 5GMS application (5GMS Application), a 5GMS client (5GMS Client), a 5GMS application function (5GMS AF) network element, a 5GMS application server (5GMS AS), and a 5GMS application provider (5GMS Application Provider). The 5GMS application may also be referred to as a 5GMS-aware application (5GMS-Aware Application). Refer to FIG. 3. An NEF and a PCF are network elements in the 5G architecture. For definitions of the network elements in the 5G architecture, refer to the architecture shown in FIG. 1. The 5GMS AF interacts with a 5G network through an N33 interface and an N5 interface. The 5GMS application provider and the 5GMS application may be deployed by an application service vendor. When the 5GMS AF and 5GMS AS are in an external untrusted zone, an M3 interface between the 5GMS AF and 5GMS AS depends on a third-party provider.

The 5GMS application, the 5GMS client, the 5GMS application function network element, the 5GMS application server, and the 5GMS application provider are respectively specific examples of the UE application, the DDCC, the data collection AF, the application server, and the application service provider in FIG. 2.

The 5GMS application may be considered as an application APP on the UE side.

The 5GMS application provider (5GMS Application Provider) is mainly a server that provides application APP content or services.

The 5GMS AF is a type of AF defined in 3GPP, and is configured to implement information exchange, such as capability exposure or metric provision, between an external server and a 3GPP network. The 5GMS AF is an AF that exclusively belongs to a media streaming service. In addition to a function of the foregoing data collection AF, the 5GMS AF also supports a function related to a media streaming service, such as media streaming session management.

The 5GMS application server (5GMS AS) may be deployed and managed by a mobile network operator (Mobile Network Operator, MNO) or deployed by an external third party. The 5GMS application server functions as a media streaming application server, for example, a content delivery network (Content Delivery Network, CDN) server.

The 5GMS client may be specifically divided into a media session handler (Media Session Handler, MSH) and a media stream handler (Media Stream Handler). For a downlink media streaming service, the media stream handler may also be referred to as a media player (Media Player, MP). For an uplink media streaming service, the media stream handler may also be referred to as a media streamer (Media Streamer, MS). The MSH is mainly configured to interact with the 5GMS AF to implement creation, control, and transmission of a media session, and the MSH may also open a related application programming interface (Application Programming Interface, API) for invoking by an upper-layer 5GMS application.

The media player (MP) or the media streamer (MS) is mainly configured to: perform media stream transmission with the 5GMS AS, encode, decode, and play the media stream, and provide an API interface for the upper-layer 5GMS application and the MSH, to implement media play and media session control.

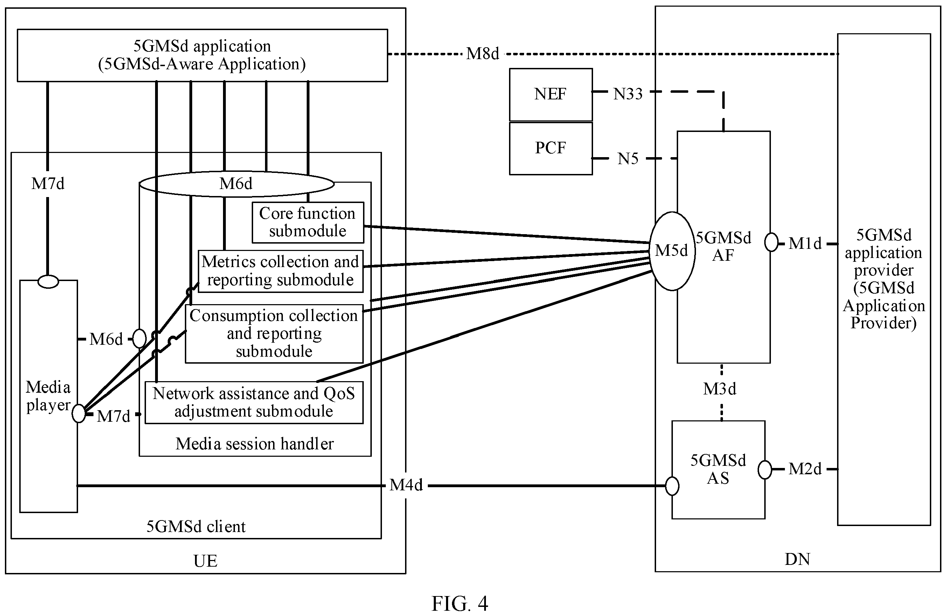

FIG. 4 is a schematic of a downlink media streaming 5GMS (5G downlink Media Streaming, 5GMSd) architecture. The architecture is the most common application scenario, that is, UE selects a media stream to play in a live broadcast or on-demand manner.

For the downlink media streaming 5GMS architecture, to represent a downlink media streaming scenario, a downlink symbol is added to the foregoing module. For example, a 5GMS AF corresponds to a 5GMSd AF in a downlink media streaming service. A 5GMSd AS is similar. All interface information is processed similarly. For example, an M5 interface is correspondingly referred to as an M5d. In the following, if specially specified, a 5GMS entity or interface is an entity in the downlink media streaming architecture. That is, if specially specified, the 5GMS AF may be the 5GMSd AF.

A 5GMS client side may include a plurality of sub-functions. A media session handler (MSH) supports the following sub-modules.
(1) A core function (Core Function) submodule implements core functions of session establishment, management, and control.
(2) A metrics collection and reporting (Metrics Collection & Reporting) submodule performs metrics collection and reporting configuration on a terminal side, to implement the metrics collection and reporting on the terminal side.
(3) A consumption collection and reporting (Consumption Collection & Reporting) submodule performs consumption information collection configuration of a media streaming service on the terminal side and reports the consumption information to the 5GMS AF based on configuration information.
(4) A network assistance and QoS (Network Assistance and QoS) adjustment submodule interacts with a network through the 5GMS AF or directly interacts with a RAN, to request corresponding policy adjustment (such as QoS adjustment) and network assistance from a network side.

The media stream handler (also referred to as the media player in a downlink direction) serves as a media access terminal, and includes the following submodules: a media data decryption submodule, a consumption policy and log recording submodule, a digital rights management (Digital Rights Management, DRM) client submodule, a media data decoding submodule, and a media display and rendering submodule.

Specifically, the 5GMS application provider creates a service provisioning (Service Provisioning) session, and sends a related feature, for example, a metrics collection and reporting feature, to the 5GMS AF. The 5GMS AF determines service access information (Service Access Information, SAI) based on feature information sent by the 5GMS application provider, and returns the SAI or index information of the SAI to the 5GMS application provider. Then, when a 5GMS application starts a media streaming service, the 5GMS application obtains the SAI from the 5GMS application provider through an M8 interface. Then, the 5GMS application sends the SAI to the media session handler MSH through an M6 interface, and the MSH performs configuration and execution based on the feature in the SAI. Alternatively, when a 5GMS application starts a media streaming service, the 5GMS application obtains the index information of the SAI from the 5G application provider through an M8 interface, and sends the index information to the MSH through an M6 interface. The MSH obtains, through an M5 interface, the SAI corresponding to the index information from the 5GMS AF, and then the MSH performs configuration and execution based on the feature in the SAI.

A metrics collection and reporting function is used as an example. First, the 5GMS application provider creates a provisioning session, and sends a related feature, for example, a metrics collection and reporting feature, to the 5GMS AF by using the session. The 5GMS AF determines SAI based on feature information sent by the 5GMS application provider, and returns the SAI or index information of the SAI to the 5GMS application provider server. Then, when a 5GMS client starts a media streaming service, the 5GMS application obtains the SAI from the 5GMS application provider through an M8 interface. Then, the 5GMS application sends the SAI to the media session handler MSH through an M6 interface, and the MSH performs configuration and execution based on the feature in the SAI. Alternatively, the 5GMS application obtains the index information of the SAI from the 5G application provider through an M8 interface, and sends the index information to the MSH through an M6 interface. The MSH obtains the SAI corresponding to the index information from the 5GMS AF through an M5 interface, and performs configuration and execution based on the feature in the SAI. For example, the MSH of the 5GMS client obtains a metrics collection and reporting configuration in the SAI, then the MSH configures, based on the metrics collection and reporting configuration, an MP to collect metrics, and the MSH reports, based on the metrics collection and reporting configuration, collected data to the 5GMS AF through the M5 interface.

It should be noted that, processing logic of an uplink media streaming service is similar to that of the downlink media streaming service scenario, and details are not described herein again. For the uplink media streaming service, uplink symbols such as 5GMSu AF, 5GMSu AS, M4u, and M5u are also correspondingly added. Details are not described herein again.

Currently, a RAN3 introduces a per-slice (per slice) QoE measurement and evaluation mechanism to a R17 NR QoE subject. This helps a mobile network operator measure and evaluate per-slice service experience, to determine a service running and experience status of a slice, and help the operator manage and enhance slice resources.

However, currently, per-slice quality of experience measurement and collection cannot be implemented, so that a slice usage status cannot be obtained through analysis.

A data collection network element in embodiments of this application may be the data collection AF in FIG. 2, the 5GMS AF in FIG. 3, the 5GMSd AF in FIG. 4, the 5GMSu AF in the uplink media streaming service, an operations, administration, and maintenance (operations, administration and maintenance, OAM) server, or a network element that has a function of the data collection AF, the 5GMS AF, the 5GMSd AF, or the 5GMSu AF in future communication such as a 6th generation (6th generation, 6G) network. Unified descriptions are provided herein, and details are not described below again.

UE in embodiments of this application may be the terminal device in FIG. 1, the direct data collection client in FIG. 2, or any one of the 5GMS application, the MSH, the MP, or the MS in FIG. 3. Unified descriptions are provided herein, and details are not described below again.

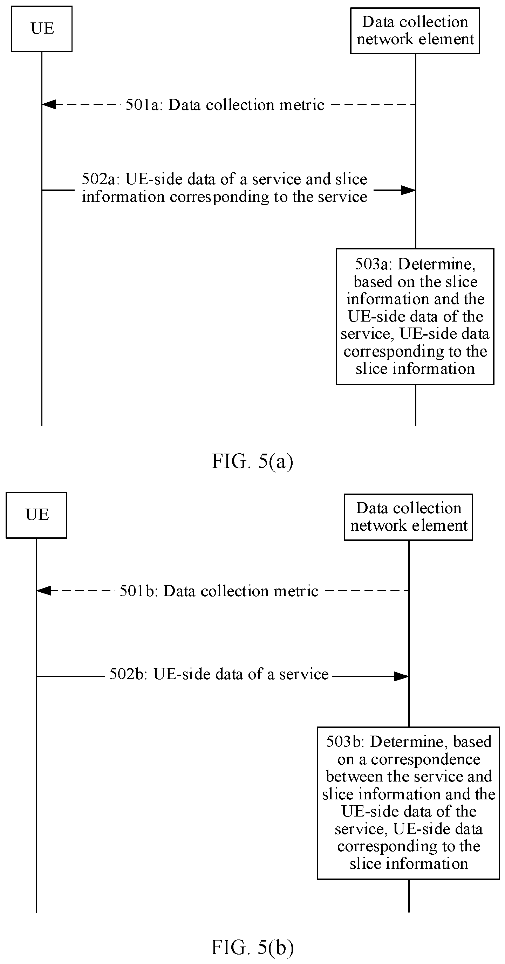

FIG. 5(a) is a schematic flowchart of a data collection method according to an embodiment of this application. The method includes the following steps.

Step 501a: A data collection network element sends a data collection metric of a service to UE. Correspondingly, the UE receives the data collection metric of the service.

The data collection metric indicates to-be-collected UE-side data of the service. For example, the to-be-collected UE-side data of the service includes quality of experience (QoE), and the quality of experience includes one or more of an average throughput, a buffer level, an initial play delay, a quantity of stalling times, and stalling time. For example, the to-be-collected UE-side data of the service may further include another type of UE data, for example, a geographical location and a moving track of the UE. This is not limited herein.

In an implementation method, step 501a may be specifically: The data collection network element sends configuration information to the UE, where the configuration information includes the data collection metric. For example, the data collection metric includes a metric list of the to-be-collected UE-side data. The configuration information may also be referred to as data collection and reporting configuration information. The configuration information is used for terminal device-side data collection and reporting.

In an implementation method, the configuration information may further include a reporting trigger condition. The reporting trigger condition includes a reporting periodicity, a reporting trigger event, or the like. The reporting periodicity indicates a periodicity of reporting the UE-side data. That is, UE-side data reporting is periodically triggered. The reporting trigger event indicates a trigger event for reporting the UE-side data. That is, UE-side data reporting is triggered by an event. The event may be, for example, an event such as service start, suspension, or closure, or may be that a piece of data in the UE-side data reaches a threshold.

Step 501a is an optional step. For example, if step 501a is not performed, another network element may send a data collection metric of a service to the UE, or the UE determines to collect and report the UE-side data.

Step 502a: The UE sends, to the data collection network element, the UE-side data of the service and slice information corresponding to the service. Correspondingly, the UE receives the UE-side data of the service and the slice information corresponding to the service.

After receiving the data collection metric of the service, the UE may collect data of the UE based on the data collection metric, and the collected data is referred to as the UE-side data. For example, if the UE receives a data collection metric 1 of a service 1 and a data collection metric 2 of a service 2, the UE collects data of the service 1 of the UE based on the data collection metric 1, to obtain UE-side data of the service 1, and the UE collects data of the service 2 of the UE based on the data collection metric 2, to obtain UE-side data of the service 2.

In addition to collecting the UE-side data, the UE further determines the slice information corresponding to the service. Then, the UE reports, to the data collection network element, the UE-side data of the service and the slice information corresponding to the service. The slice information includes identification information of a slice, for example, single network slice selection assistance information (Single Network Slice Selection Assistance Information, S-NSSAI), or includes identification information of a slice and a data network name (data network name, DNN).

The slice information corresponding to the service may be understood as information about a slice that carries the service, and there may be one or more slices. Optionally, the slice information corresponding to the service may include a correspondence between the slice and the service.

In an implementation method, step 502a may be specifically: The UE sends a measurement report to the data collection network element, where the measurement report includes the UE-side data of the service and the slice information corresponding to the service.

Step 503a: The data collection network element determines, based on the slice information corresponding to the service and the UE-side data of the service, UE-side data corresponding to the slice information.

Determining the UE-side data corresponding to the slice information may also be understood as determining the per-slice UE-side data.

In an implementation method, the UE-side data corresponding to the slice information may be UE-side data of a plurality of services corresponding to the slice information. For example, service types of the plurality of services are the same. The service type may include one or more of the following: streaming media, multimedia telephony, VR, multicast, and broadcast. For example, the data collection network element receives, from UE 1, UE-side data 1 of a service 1 and slice information 1 corresponding to the service 1; receives, from UE 2, UE-side data 2 of a service 2 and the slice information 1 corresponding to the service 2; and receives, from UE 3, UE-side data 3 of a service 3 and the slice information 1 corresponding to the service 3. Because the service 1 of the UE 1, the service 2 of the UE 2, and the service 3 of the UE 3 all correspond to the slice information 1, the data collection network element determines that UE-side data corresponding to the slice information 1 includes the UE-side data 1, the UE-side data 2, and the UE-side data 3. Service types of the service 1, the service 2, and the service 3 are the same. For example, the services are all streaming media services. For example, the service 1 is a Tencent video, and services 2 and 3 are iQIYI videos.

In another implementation method, the UE-side data corresponding to the slice information may be UE-side data of a service corresponding to the slice information. For example, the data collection network element receives, from UE 1, UE-side data 1 of a service 1 and slice information 1 corresponding to the service 1; receives, from UE 2, UE-side data 2 of the service 1 and the slice information 1 corresponding to the service 1; and receives, from UE 3, UE-side data 3 of the service 1 and the slice information 1 corresponding to the service 1. Because the service 1 of the UE 1, the service 1 of the UE 2, and the service 1 of the UE 3 all correspond to the slice information 1, the data collection network element determines that UE-side data corresponding to the slice information 1 includes the UE-side data 1, the UE-side data 2, and the UE-side data 3.

In an implementation method, the data collection network element may analyze a slice usage status based on the UE-side data corresponding to the slice information. Optionally, the data collection network element may further perform, based on an analysis result, a network optimization operation such as dynamically adjusting slice resources or indicating the UE to perform slice adjustment. For example, if an analysis result that corresponds to the slice information 1 and that is determined by the data collection network element indicates that quality of experience of a slice 1 corresponding to the slice information 1 is poor, a resource quantity of the slice 1 may be increased, to improve the quality of experience of the slice 1. Alternatively, UE using the slice 1 may be notified to hand over a service of the UE to another slice with good quality of experience.

In another implementation method, the data collection network element may provide the UE-side data corresponding to the slice information for a third-party network element, for example, an NWDAF. Optionally, the third-party network element analyzes a slice usage status based on the UE-side data corresponding to the slice information, and performs, based on an analysis result, a network optimization operation such as dynamically adjusting slice resources or indicating the UE to perform slice adjustment. For example, if an analysis result that corresponds to the slice information 1 and that is determined by the third party indicates that quality of experience of a slice 1 corresponding to the slice information 1 is poor, a resource quantity of the slice 1 may be increased, to improve the quality of experience of the slice 1. Alternatively, UE using the slice 1 may be notified to hand over a service of the UE to another slice with good quality of experience.

According to the foregoing solution, when reporting the UE-side data of the service, the UE further reports the slice information corresponding to the service, so that the data collection network element may associate the UE-side data with the slice information, to implement collection of the per-slice UE-side data. This helps determine a slice usage status.

For example, the following describes four different implementation methods for triggering the UE to report the slice information corresponding to the service to the data collection network element.

Method 1: In step 501a, the data collection network element further sends first indication information to the UE, where the first indication information indicates to report the slice information corresponding to the service, or the first indication information indicates to collect and report the slice information corresponding to the service.

In the method, the data collection network element explicitly indicates, by using the first indication information, the UE to send the slice information corresponding to the service.

For example, the data collection network element sends the data collection metric and the first indication information to the UE, where the first indication information indicates to report slice information corresponding to a service 1. In this case, the UE collects UE-side data corresponding to the service 1 and determines the slice information corresponding to the service 1. For example, if the service 1 corresponds to slice information 2, the UE subsequently reports the UE-side data corresponding to the service 1 and the slice information 2 corresponding to the service 1 to the data collection network element.

It should be noted that, in actual application, the first indication information and the data collection metric may be parallel information, or the first indication information may be sent as a part of the data collection metric, that is, the data collection metric may include the first indication information.

In an implementation method, before step 501a, the data collection network element receives the first indication information from an application service provider, and then the data collection network element sends the first indication information to the UE. The application service provider is, for example, the application service provider in FIG. 2, the 5GMS application provider in FIG. 3, the 5GMSd application provider in FIG. 4, or the 5GMSu application provider.

In another implementation method, before step 501a, the data collection network element receives second indication information from an application service provider, where the second indication information indicates to report the slice information corresponding to the service, or the second indication information indicates to collect and report the slice information corresponding to the service. Then, the data collection network element determines the first indication information based on the second indication information, and sends the first indication information to the UE. The application service provider is, for example, the application service provider in FIG. 2, the 5GMS application provider in FIG. 3, the 5GMSd application provider in FIG. 4, or the 5GMSu application provider. For example, the first indication information and the second indication information herein have a same function, but are expressed in different manners.

Method 2: In step 501a, the data collection network element further sends the slice information to the UE, to indicate the UE to report UE-side data that is of the service and that is carried on a slice corresponding to the slice information.

In the method, the data collection network element explicitly indicates the UE to collect and report UE-side data that is of the service and that is carried in specific slice information.

For example, in step 501a, the data collection network element sends the data collection metric, slice information 1, and slice information 2 to the UE, and the UE collects UE-side data that is of the service and that is carried in slices corresponding to the slice information 1 and the slice information 2. Subsequently, the UE sends, to the data collection network element, the data that is of the service and that is carried on the slices corresponding to the slice information 1 and the slice information 2 and the slice information corresponding to the service.

In an implementation method, in Method 2, if the data collection network element further receives the first indication information or second indication information from an application service provider, the data collection network element may determine, based on the first indication information or the second indication information, to collect the per-slice UE-side data. Therefore, it may be understood as that the data collection network element determines the slice information based on the first indication information or the second indication information, or the first indication information or the second indication information triggers the data collection network element to generate or determine the slice information.

In an implementation method, the first indication information or the second indication information received by the data collection network element from the application service provider may be the slice information. In other words, the data collection network element receives the slice information from the application service provider, and sends the slice information to the UE, to indicate the UE to collect the UE-side data that is of the service and that is carried in the slice information.

In another implementation method, in Method 2, the data collection network element may alternatively determine, according to a local policy, to collect the per-slice UE-side data, and then determine the slice information.

Method 3: When determining to collect the UE-side data corresponding to the service, the UE also needs to determine the slice information corresponding to the service, and further reports the slice information corresponding to the service when reporting the UE-side data corresponding to the service.

In an implementation method, the UE may determine, according to a local policy, that the slice information corresponding to the service needs to be determined and reported.

Method 4: In step 501a, the data collection network element further sends first indication information and the slice information to the UE, where the first indication information indicates to report the slice information corresponding to the service, or the first indication information indicates to collect and report the slice information corresponding to the service, and the slice information indicates the UE to report UE-side data that is of the service and that is carried in the slice information.

For example, the data collection network element sends the data collection metric, the first indication information, and slice information 1 to the UE, where the first indication information indicates to report slice information corresponding to the service 1, and the slice information 1 indicates the UE to report UE-side data of a service corresponding to the slice information 1. After receiving the first indication information, the slice information 1, and the data collection metric, the UE determines whether slice information actually corresponding to the service 1 is the slice information 1. If the slice information actually corresponding to the service 1 is not the slice information 1, the UE does not collect or report UE-side data corresponding to the service 1. If the slice information actually corresponding to the service 1 is the slice information 1, the UE collects UE-side data corresponding to the service 1, and subsequently the UE sends, to the data collection network element, the UE-side data corresponding to the service 1 and the slice information 1 corresponding to the service 1.

In an implementation method, in Method 4, if the data collection network element further receives the first indication information or second indication information from an application service provider, the data collection network element may determine, based on the first indication information or the second indication information, to collect the per-slice UE-side data. Therefore, it may be understood as that the data collection network element determines the slice information based on the first indication information or the second indication information, or the first indication information or the second indication information triggers the data collection network element to generate or determine the slice information.

Based on Method 1, Method 2, Method 3, or Method 4, the data collection network element may further receive third indication information from the application service provider, where the third indication information indicates to collect the per-slice UE-side data. It may be understood that the third indication information explicitly indicates the data collection network element to collect the per-slice UE-side data.

In conclusion, in specific implementation, the embodiment in FIG. 5(a) may include but is not limited to the following implementation methods.

In a first implementation method, the data collection network element receives the first indication information from the application service provider, and sends the first indication information and the data collection metric to the UE. Subsequently, step 502a and step 503a are performed.

In a second implementation method, the data collection network element receives the first indication information from the application service provider, determines slice information based on the first indication information, and sends the slice information and the data collection metric to the UE, or sends the first indication information, the slice information, and the data collection metric to the UE. Subsequently, step 502a and step 503a are performed.

In a third implementation method, the data collection network element receives the second indication information from the application service provider, determines the first indication information based on the second indication information, and sends the first indication information and the data collection metric to the UE. Subsequently, step 502a and step 503a are performed.

In a fourth implementation method, the data collection network element receives the second indication information from the application service provider, determines slice information based on the second indication information, and sends the slice information and the data collection metric to the UE. Subsequently, step 502a and step 503a are performed.

In a fifth implementation method, the data collection network element receives the third indication information from the application service provider, determines the first indication information based on the third indication information, and sends the first indication information and the data collection metric to the UE. Subsequently, step 502a and step 503a are performed.

In a sixth implementation method, the data collection network element receives the third indication information from the application service provider, determines slice information based on the third indication information, and sends the slice information and the data collection metric to the UE. Subsequently, step 502a and step 503a are performed.

In a seventh implementation method, the data collection network element receives the third indication information from the application service provider, determines slice information and the first indication information based on the third indication information, and sends the slice information, the first indication information, and the data collection metric to the UE. Subsequently, step 502a and step 503a are performed.

On the basis of the first implementation method, the second implementation method, the third implementation method, or the fourth implementation method, the data collection network element may further receive the third indication information from the application service provider.

FIG. 5(b) is a schematic flowchart of a data collection method according to an embodiment of this application. The method includes the following steps.

Step 501b: A data collection network element sends a data collection metric of a service to UE. Correspondingly, the UE receives the data collection metric of the service.

The data collection metric indicates to-be-collected UE-side data of the service. For example, the to-be-collected UE-side data of the service includes quality of experience (QoE), and the quality of experience includes one or more of an average throughput, a buffer level, an initial play delay, a quantity of stalling times, and stalling time. For example, the to-be-collected UE-side data of the service may further include another type of UE data, for example, a geographical location and a moving track of the UE. This is not limited herein.

In an implementation method, step 501b may be specifically: The data collection network element sends configuration information to the UE, where the configuration information includes the data collection metric. The configuration information may also be referred to as data collection and reporting configuration information.

Step 501b is an optional step. For example, if step 501b is not performed, another network element may send a data collection metric of a service to the UE, or the UE determines to collect and report the UE-side data.

Step 502b: The UE sends the UE-side data of the service to the data collection network element. Correspondingly, the UE receives the UE-side data of the service.

After receiving the data collection metric of the service, the UE may collect data of the UE based on the data collection metric, and the collected data is referred to as the UE-side data. For example, if the UE receives a data collection metric 1 of a service 1 and a data collection metric 2 of a service 2, the UE collects data of the service 1 of the UE based on the data collection metric 1, to obtain UE-side data of the service 1, and the UE collects data of the service 2 of the UE based on the data collection metric 2, to obtain UE-side data of the service 2.

In an implementation method, step 502b may be specifically: The UE sends a measurement report to the data collection network element, where the measurement report includes the UE-side data of the service.

Step 503b: The data collection network element determines, based on a correspondence between the service and slice information and the UE-side data of the service, UE-side data corresponding to the slice information.

Determining the UE-side data corresponding to the slice information may also be understood as determining the per-slice UE-side data.

In an implementation method, the data collection network element obtains the correspondence between the service and the slice information from a PCF or another network element. For example, the data collection network element sends a request message to the PCF, where the request message includes identification information of the service, and the request message is used to request to obtain the slice information corresponding to the service, that is, the slice information that carries the service. The identification information of the service may be, for example, flow description information of the service or an application identifier, for example, IP quintuple information. The request message may be a query request message or a subscription request message. The PCF determines the slice information corresponding to the service, and then sends the slice information corresponding to the service to the data collection network element. If the data collection network element sends the subscription request message to the PCF, when the slice information corresponding to the service is updated subsequently, the PCF actively sends the updated slice information corresponding to the service to the data collection network element, or the PCF periodically sends the slice information corresponding to the service to the data collection network element. This specifically depends on a reporting trigger condition in the subscription request message.

In an implementation method, the UE-side data corresponding to the slice information may be UE-side data of a plurality of services corresponding to the slice information, and service types of the plurality of services are the same. For example, the data collection network element receives UE-side data 1 of a service 1 from UE 1, receives UE-side data 2 of a service 2 from UE 2, and receives UE-side data 3 of a service 3 from UE 3, and the data collection network element determines that the service 1 of the UE 1, the service 2 of the UE 2, and the service 3 of the UE 3 all correspond to slice information 1. In this case, the data collection network element determines that UE-side data corresponding to the slice information 1 includes the UE-side data 1, the UE-side data 2, and the UE-side data 3. Service types of the service 1, the service 2, and the service 3 are the same. For example, the services are all streaming media services. For example, the service 1 is a Tencent video, and services 2 and 3 are iQIYI videos.

In another implementation method, the UE-side data corresponding to the slice information may be UE-side data of a service corresponding to the slice information. For example, the data collection network element receives UE-side data 1 of a service 1 from UE 1, receives UE-side data 2 of the service 1 from UE 2, and receives UE-side data 3 of the service 1 from UE 3, and the data collection network element determines that the service 1 of the UE 1, the service 1 of the UE 2, and the service 1 of the UE 3 all correspond to slice information 1. In this case, the data collection network element determines that UE-side data corresponding to the slice information 1 includes the UE-side data 1, the UE-side data 2, and the UE-side data 3.

After the data collection network element determines the UE-side data corresponding to the slice information, for a method for using the UE-side data corresponding to the slice information, refer to descriptions of step 503a.

According to the foregoing solution, the data collection network element receives the UE-side data that is of the service and that is reported by the UE, and the data collection network element further determines the correspondence between the service and the slice information, so that the data collection network element may associate the UE-side data with the slice information, to implement collection of the per-slice UE-side data. This helps determine a slice usage status.

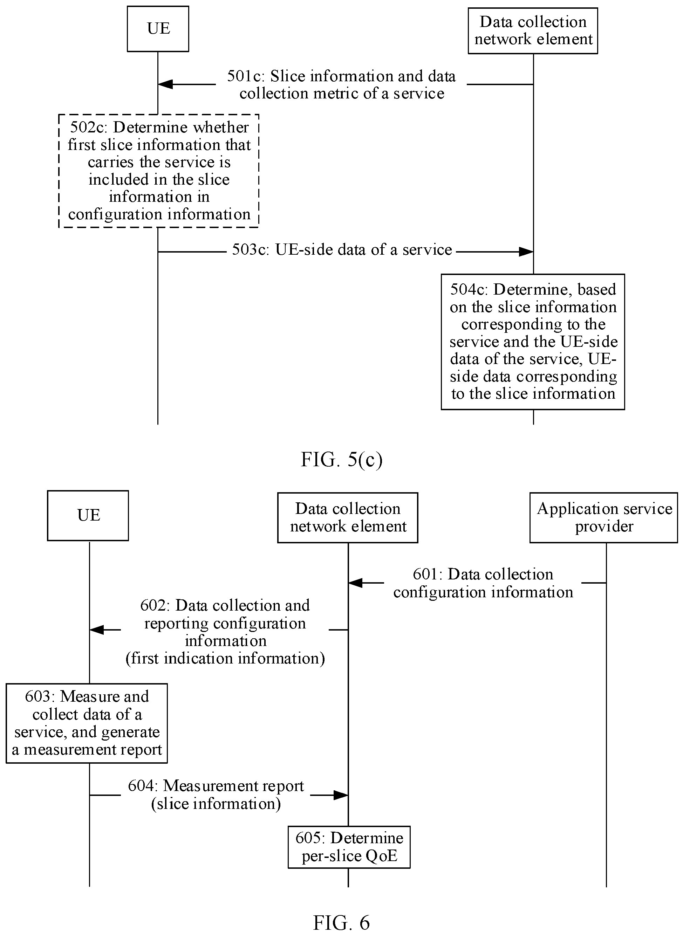

FIG. 5(c) is a schematic flowchart of a data collection method according to an embodiment of this application. The method includes the following steps.

Step 501c: A data collection network element sends slice information and a data collection metric of a service to UE. Correspondingly, the UE receives the slice information and the data collection metric of the service.

The slice information indicates to perform metrics collection and reporting on a service carried on a slice corresponding to the slice information, that is, perform the metrics collection and reporting on the service running on the slice corresponding to the slice information.

The data collection metric indicates to-be-collected UE-side data of the service. For example, the to-be-collected UE-side data of the service includes quality of experience (QoE), and the quality of experience includes one or more of an average throughput, a buffer level, an initial play delay, a quantity of stalling times, and stalling time. For example, the to-be-collected UE-side data of the service may further include another type of UE data, for example, a geographical location and a moving track of the UE. This is not limited herein.

In an implementation method, step 501c may be specifically: The data collection network element sends configuration information to the UE, where the configuration information includes the slice information and the data collection metric. For example, the data collection metric is a metric list of the to-be-collected UE-side data. The configuration information may also be referred to as data collection and reporting configuration information.

In an implementation method, the configuration information may further include a reporting trigger condition, including a reporting periodicity, a reporting trigger event, or the like. The reporting periodicity indicates a periodicity of reporting the UE-side data. That is, UE-side data reporting is periodically triggered. The reporting trigger event indicates a trigger event for reporting the UE-side data. That is, UE-side data reporting is triggered by an event. The event may be, for example, an event such as service start, suspension, or closure, or may be that a piece of data in the UE-side data reaches a threshold.

Step 502c: The UE determines whether first slice information that carries the service is included in the slice information in the configuration information.

If the first slice information that carries the service is included in the slice information in the configuration information, the UE collects UE-side data corresponding to the service, and performs the following step 503c and step 504c. In other words, if the first slice information that carries the service is included in the slice information in the configuration information, the UE-side data is collected and reported.

If the first slice information that carries the service is not included in the slice information in the configuration information, the UE does not collect or report the UE-side data.

For example, the first slice information corresponds to a first slice, and the slice information in the configuration information corresponds to a second slice. There are one or more first slices and one or more second slices. That the first slice information is included in the slice information in the configuration information may be understood as that all first slices are the second slices, or some first slices are the second slices.

For example, the data collection network element sends slice information 1 and slice information 2 to the UE, to indicate the UE to collect UE-side data of a service 1 corresponding to the slice information 1 and the slice information 2. The UE determines slice information actually corresponding to the service of the UE, which is also referred to as slice information (referred to as first slice information below) that carries the service 1. For example, if the first slice information is the slice information 1, the UE determines that the first slice information (that is, the slice information 1) that carries the service is included in the slice information (that is, the slice information 1 and the slice information 2) in the configuration information. For another example, if the first slice information is slice information 3, the UE determines that the first slice information (that is, the slice information 3) that carries the service is not included in the slice information (that is, the slice information 1 and the slice information 2) in the configuration information.

Step 502c is an optional step. If step 502c is not performed, the UE may consider by default that the first slice information that carries the service is included in the slice information in the configuration information.

Step 503c: The UE sends the UE-side data of the service to the data collection network element. Correspondingly, the UE receives the UE-side data of the service.

After receiving the data collection metric of the service, the UE may collect data of the UE based on the data collection metric, and the collected data is referred to as the UE-side data. For example, if the UE receives a data collection metric 1 of a service 1 and a data collection metric 2 of a service 2, the UE collects data of the service 1 of the UE based on the data collection metric 1, to obtain UE-side data of the service 1, and the UE collects data of the service 2 of the UE based on the data collection metric 2, to obtain UE-side data of the service 2.

In an implementation method, when sending the UE-side data of the service to the data collection network element, the UE may further send the first slice information that carries the service.

In an implementation method, step 503c may be specifically: The UE sends a measurement report to the data collection network element, where the measurement report includes the UE-side data of the service. Optionally, the measurement report further includes the first slice information that carries the service.

Step 504c: The data collection network element determines, based on the slice information corresponding to the service and the UE-side data of the service, UE-side data corresponding to the slice information.

Determining the UE-side data corresponding to the slice information may also be understood as determining the per-slice UE-side data.

A specific implementation of step 504c is the same as that of step 503a. For details, refer to the foregoing descriptions.

According to the foregoing solution, when sending the data collection metric of the service to the UE, the data collection network element further sends the slice information, so that the UE collects and reports the UE-side data of the service when determining that the slice information corresponding to the service is the same as the slice information sent by the data collection network element. Therefore, the data collection network element may associate the UE-side data with the slice information, to implement collection of the per-slice UE-side data. This helps determine a slice usage status.

In an implementation method, before step 501c, the data collection network element may further receive indication information from an application service provider, where the indication information indicates to collect the per-slice UE-side data. It may be understood that the indication information explicitly indicates the data collection network element to collect the per-slice UE-side data. Optionally, that the data collection network element determines the slice information in step 501c based on the indication information may be understood as that after receiving the indication information from the application service provider, the data collection network element triggers the data collection network element to generate the slice information.

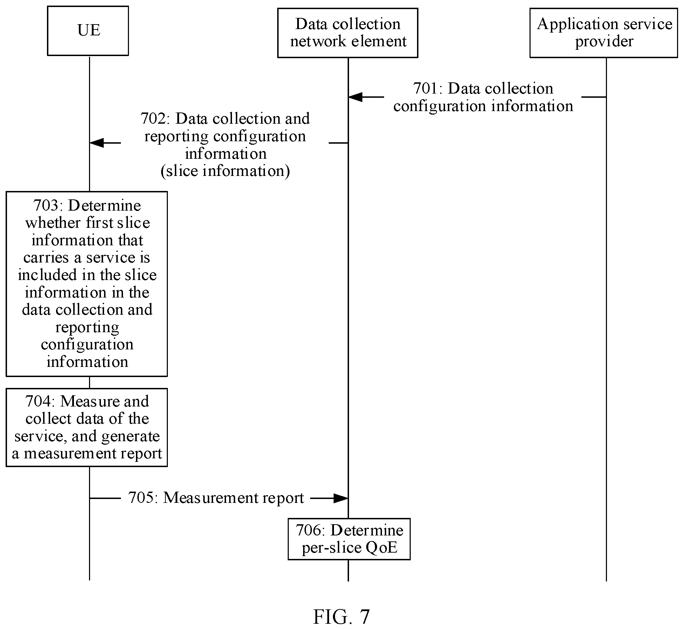

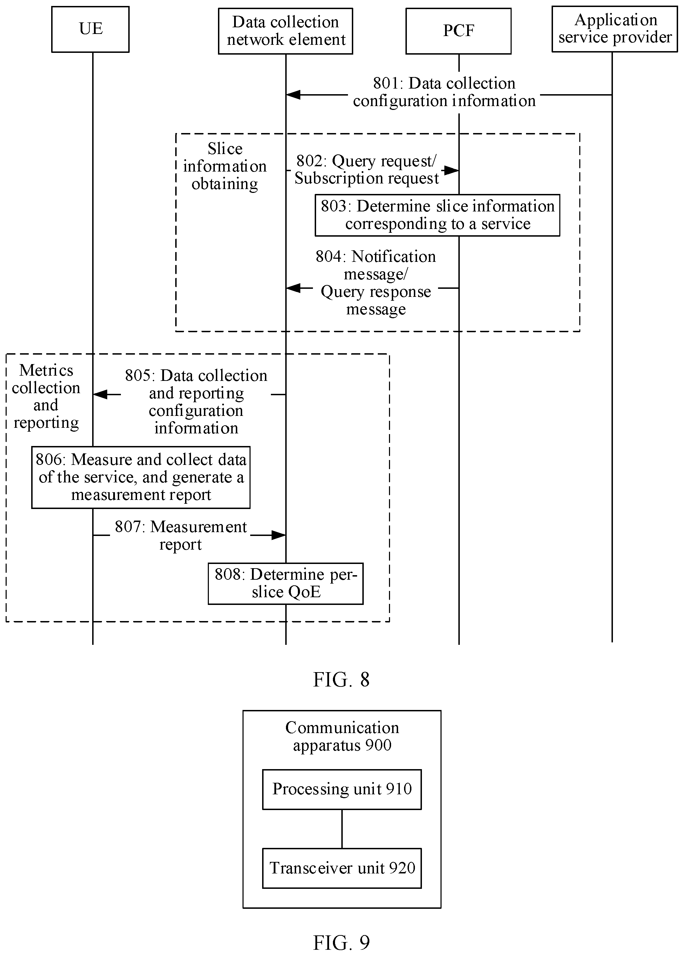

The following describes the embodiments of FIG. 5(a) to FIG. 5(c) with reference to specific embodiments of FIG. 6 to FIG. 8. The following embodiment of FIG. 6 may be used as a specific example of the embodiment of FIG. 5(a), the following embodiment of FIG. 7 may be used as a specific example of the embodiment of FIG. 5(a) or FIG. 5(c), and the following embodiment of FIG. 8 may be used as a specific example of the embodiment of FIG. 5(b).

In the following embodiments of FIG. 6 to FIG. 8, an example in which collected UE-side data is quality of experience (QoE) is used for description. Therefore, a data collection metric specifically refers to to-be-collected QoE information.

In the following embodiments of FIG. 6 to FIG. 8, an application service provider, a data collection network element, a data collection client, and an application may be respectively the application service provider, the data collection AF, the direct data collection client, and the UE application in FIG. 2, may be respectively the 5GMS application provider, the 5GMS AF, the media session handler, and the 5GMS application in FIG. 3, may be respectively the 5GMSd application provider, the 5GMSd AF, the media session handler, and the 5GMSd application in the downlink media streaming service in FIG. 4, or may be respectively the 5GMSu application provider, the 5GMSuAF, the media session handler, and the 5GMSu application in the uplink media streaming service.

FIG. 6 is a schematic flowchart of a data collection method according to an embodiment of this application. The method includes the following steps.

Step 601: An application service provider sends data collection configuration information to a data collection network element in a service provisioning (provisioning) process. Correspondingly, the data collection network element receives the data collection configuration information.

The data collection configuration information includes an application identifier and to-be-collected QoE information. The application identifier is used to identify a service. If the application service provider and the data collection network element exclusively belong to a same application party, for example, in a 5GMS scenario, the application identifier may not be carried.

For example, the to-be-collected QoE information includes one or more of an average throughput, a buffer level, an initial play delay, a quantity of stalling times, and stalling time.

Optionally, the data collection configuration information further includes indication information. The indication information indicates to report slice information corresponding to the service, or the indication information indicates to collect and report slice information corresponding to the service.

Step 602: The data collection network element sends data collection and reporting configuration information to UE. Correspondingly, the UE receives the data collection and reporting configuration information.

The data collection and reporting configuration information is generated by the data collection network element based on the data collection configuration information received from the application service provider, and the data collection and reporting configuration information includes indication information, to-be-collected QoE information, and a reporting trigger condition. For example, the to-be-collected QoE information includes one or more of an average throughput, a buffer level, an initial play delay, a quantity of stalling times, and stalling time. The reporting trigger condition includes a reporting periodicity, a reporting trigger event, or the like.

In an implementation method, the indication information may alternatively be sent to a UE side as a metric in the to-be-collected QoE information. In other words, the data collection and reporting configuration information includes the to-be-collected QoE information and the reporting trigger condition. The to-be-collected QoE information includes the indication information, and includes one or more of the average throughput, the buffer level, the initial play delay, the quantity of stalling times, and stalling time.

If the data collection configuration information includes indication information, the indication information in the data collection and reporting configuration information is the indication information in the data collection configuration information, or the indication information in the data collection and reporting configuration information is generated based on the indication information in the data collection configuration information. If the data collection configuration information does not include indication information, the indication information in the data collection and reporting configuration information may be generated when the data collection network element determines, based on a requirement of the data collection network element, that per-slice service experience evaluation and measurement need to be performed.

In an implementation method, when the embodiment of FIG. 6 is applied to the architecture shown in FIG. 3 or FIG. 4, the data collection and reporting configuration information in step 602 may be sent to the MSH in the UE as a part of the foregoing described SAI, and then the MSH collects UE data (that is, QoE information). For a process of sending the SAI, refer to the foregoing descriptions. Alternatively, the data collection network element (that is, the 5GMS AF or the 5GMSd AF) actively sends the data collection and reporting configuration information to the MSH of the UE through the M5 interface or the M5d interface, or the data collection network element (that is, the 5GMS AF or the 5GMSd AF) sends the data collection and reporting configuration information to the MSH of the UE through the M5 interface or the M5d interface based on a request of the MSH of the UE.

Step 603: The UE measures and collects data of the service based on the data collection and reporting configuration information, and generates a measurement report.

The measurement report includes slice information and QoE information corresponding to the service used by the UE, and the QoE information includes one or more of an average throughput, a buffer level, an initial play delay, a quantity of stalling times, and stalling time.

A manner of obtaining the slice information corresponding to the service used by the UE is not limited in this embodiment of this application. For example, the UE may obtain, according to the following method, the slice information corresponding to the service used by the UE.

Method 1: The slice information corresponding to a PDU session in which the service is located is obtained by using an AT command: AT Command +CGDCONT.

For specific implementation of the method, refer to descriptions in the TS 27.007 section.

Method 2: The slice information corresponding to the service is obtained from a URSP rule by using a UE routing selection policy (UE routing selection policy, URSP) rule and identification information of the service, for example, information such as an application identifier or a corresponding IP triplet.

In an implementation method, when the embodiment of FIG. 6 is applied to the architecture shown in FIG. 4, step 603 may be specifically: The MSH of the UE configures, based on the data collection and reporting configuration information, the media player (MP) to collect data, and reports the collected UE data (that is, QoE information) to the MSH. Subsequently, the MSH may report the collected QoE information to the data collection network element (that is, the 5GMSd AF).

Step 604: The UE sends the measurement report to the data collection network element based on the data collection and reporting configuration information.

The measurement report includes the slice information and the QoE information corresponding to the service used by the UE, and the QoE information includes one or more of the average throughput, the buffer level, the initial play delay, the quantity of stalling times, and the stalling time. Specifically, the slice information is transmitted together with the QoE information, or the slice information is included in the QoE information for transmission. This is not limited herein.

For example, the UE may periodically send the measurement report to the data collection network element based on the reporting periodicity in the data collection and reporting configuration information.

For another example, the UE may send the measurement report to the data collection network element based on the reporting trigger event in the data collection and reporting configuration information when the reporting trigger event is met. For example, when a value of a metric reaches a threshold, the reporting trigger event is met. For another example, when the service ends, the reporting trigger event is met.

It should be noted that, in a process in which the UE uses the service, if a slice corresponding to the service changes, for example, a slice 1 is updated to a slice 2, the UE may generate and send two measurement reports. One measurement report includes QoE information collected before the slice changes and information about the slice 1, and the other measurement report includes QoE information collected after the slice changes and information about the slice 2. Alternatively, the UE sends one measurement report. The measurement report includes information about the slice 1 and QoE information collected before the slice corresponding to the information about the slice 1 changes, and includes information about the slice 2 and QoE information collected after the slice corresponding to the information about the slice 2 changes. In addition, the two pieces of QoE information need to be distinguished in the measurement report, so that the data collection network element can identify the two pieces of the QoE information.

Step 605: The data collection network element determines per-slice QoE based on the measurement report.

For example, the data collection network element receives a measurement report 1 from UE 1, and receives a measurement report 2 from UE 2. The measurement report 1 includes information about a slice 1 corresponding to a service 1 and QoE information 1 of the service 1, and the measurement report 2 includes the information about the slice 1 corresponding to the service 1 and QoE information 2 of the service 1. The data collection network element may determine, based on the QoE information 1 and the QoE information 2, QoE corresponding to the service 1 in the slice 1.

Subsequently, the data collection network element may provide per-slice QoE information for another network element, to perform a network optimization operation such as dynamically adjusting slice resources or indicating the UE to perform slice adjustment. For example, if quality of experience of a slice is poor, a resource quantity of the slice may be increased, to improve the quality of experience of the slice. For another example, if quality of experience of a slice is poor, UE using the slice may be notified to hand over a service of the UE to another slice with good quality of experience.

According to the foregoing solution, an existing service provisioning process is improved. The application provider or the data collection network element uses slice information as one of metrics in data collection and reporting configuration, to enable the UE to report the slice information. Finally, the data collection network element associates QoE information of the UE with the slice information, so that the data collection network element can learn of the QoE information and the slice information of the service corresponding to the UE, and implement per-slice QoE collection. This helps an operator perform network optimization such as dynamic slice resource management and slice selection and adjustment, and provides better service experience for a user.

FIG. 7 is a schematic flowchart of a data collection method according to an embodiment of this application. The method includes the following steps.

Step 701 is the same as step 601.

Step 702: A data collection network element sends data collection and reporting configuration information to UE. Correspondingly, the UE receives the data collection and reporting configuration information.

The data collection and reporting configuration information is generated by the data collection network element based on data collection configuration information received from an application service provider, and the data collection and reporting configuration information includes slice information, to-be-collected QoE information, and a reporting trigger condition, or the data collection and reporting configuration information includes indication information, slice information, to-be-collected QoE information, and a reporting trigger condition. The indication information indicates to report slice information corresponding to a service. The slice information includes identification information of a slice, or includes identification information of a slice and a DNN. For example, the to-be-collected QoE information includes one or more of an average throughput, a buffer level, an initial play delay, a quantity of stalling times, and stalling time. The reporting trigger condition includes a reporting periodicity, a reporting trigger event, or the like.

If the data collection configuration information includes indication information, the data collection network element determines, based on the indication information, slice information on which per-slice QoE measurement needs to be performed, that is, the indication information triggers the data collection network element to determine the slice information on which QoE measurement needs to be performed. If the data collection configuration information does not include the indication information, the data collection network element determines, based on a requirement of the data collection network element, slice information on which per-slice QoE measurement needs to be performed. Optionally, the indication information received by the data collection network element from the application service provider may be the slice information, and then the data collection network element adds the slice information to data collection and reporting configuration information, and sends the data collection and reporting configuration information to the UE, so that the UE reports QoE information that is of the service and that is carried in the slice information.

In an implementation method, when the embodiment of FIG. 7 is applied to the architecture shown in FIG. 3 or FIG. 4, the data collection and reporting configuration information in step 702 may be sent to the MSH in the UE as a part of the foregoing described SAI, and then the MSH collects UE data (that is, QoE information). For a process of sending the SAI, refer to the foregoing descriptions. Alternatively, the data collection network element (that is, the 5GMS AF or the 5GMSd AF) actively sends the data collection and reporting configuration information to the MSH of the UE through the M5 interface or the M5d interface, or the data collection network element (that is, the 5GMS AF or the 5GMSd AF) sends the data collection and reporting configuration information to the MSH of the UE through the M5 interface or the M5d interface based on a request of the MSH of the UE.

Step 703: The UE determines whether first slice information that carries the service is included in the slice information in the data collection and reporting configuration information.

For example, if the data collection and reporting configuration information in step 702 includes slice information 1, slice information 2, to-be-collected QoE information, and a reporting trigger condition, the UE determines whether the first slice information that carries the service is included in the slice information (that is, the slice information 1 and the slice information 2) in the data collection and reporting configuration information. For example, if the first slice information is the slice information 1, the first slice information is included in the slice information in the data collection and reporting configuration information, and the UE collects and reports QoE information corresponding to the service, that is, performs a subsequent step. For another example, if the first slice information is slice information 3, the first slice information is not included in the slice information in the data collection and reporting configuration information, and the UE does not collect or report QoE information corresponding to the service, that is, does not perform a subsequent step.

For another example, if the data collection and reporting configuration information in step 702 includes indication information, slice information 1, slice information 2, to-be-collected QoE information, and a reporting trigger condition, the UE determines, based on the indication information, whether the first slice information that carries the service is included in the slice information (that is, the slice information 1 and the slice information 2) in the data collection and reporting configuration information. For example, if the first slice information is the slice information 1, the first slice information is included in the slice information in the data collection and reporting configuration information, and the UE collects and reports QoE information corresponding to the service, that is, performs a subsequent step. For another example, if the first slice information is slice information 3, the first slice information is not included in the slice information in the data collection and reporting configuration information, and the UE does not collect or report QoE information corresponding to the service, that is, does not perform a subsequent step.

A manner of obtaining the slice information corresponding to the service used by the UE is not limited in this embodiment of this application. For details, refer to the descriptions of step 603.

Step 704: The UE measures and collects data of the service based on the data collection and reporting configuration information, and generates a measurement report.

The service is in a slice corresponding to the slice information in the data collection and reporting configuration information, that is, the UE collects data of a service in a slice specified by the data collection network element.

When the data collection and reporting configuration information includes the slice information, the to-be-collected QoE information, and the reporting trigger condition, the measurement report includes the slice information corresponding to the service used by the UE and QoE information of the UE, or the measurement report includes QoE information of the UE. When the data collection and reporting configuration information includes the indication information, the slice information, the to-be-collected QoE information, and the reporting trigger condition, the measurement report includes the slice information corresponding to the service used by the UE and QoE information of the UE. The QoE information includes one or more of an average throughput, a buffer level, an initial play delay, a quantity of stalling times, and stalling time.

Optionally, when the measurement report includes the slice information, the slice information may be transmitted together with the QoE information, or the slice information is included in the QoE information for transmission. This is not limited herein.

In an implementation method, when the embodiment of FIG. 7 is applied to the architecture shown in FIG. 4, step 704 may be specifically: The MSH of the UE configures, based on the data collection and reporting configuration information, the media player (MP) to collect data, and reports the collected UE data (that is, QoE information) to the MSH. Subsequently, the MSH may report the collected QoE information to the data collection network element (that is, the 5GMSd AF).

Step 705: The UE sends the measurement report to the data collection network element based on the data collection and reporting configuration information.

For example, the UE may periodically send the measurement report to the data collection network element based on the reporting periodicity in the data collection and reporting configuration information.

For another example, the UE may send the measurement report to the data collection network element based on the reporting trigger event in the data collection and reporting configuration information when the reporting trigger event is met. For example, when a value of a metric reaches a threshold, the reporting trigger event is met. For another example, when the service ends, the reporting trigger event is met.

It should be noted that, if a slice corresponding to the service changes in a process in which the UE uses the service, the UE needs to perform step 703 again. It may be understood that, after receiving the data collection and reporting configuration information, the UE needs to determine, based on the slice information or the indication information in the data collection and reporting configuration information, whether the slice information corresponding to the service is the same as the slice information in the data collection and reporting configuration information before data collection and reporting. If the slice information corresponding to the service is the same as the slice information in the data collection and reporting configuration information, UE-side data of the service is collected and reported. Therefore, when a slice corresponding to the service changes, the UE also needs to perform determining again, that is, determine whether updated slice information corresponding to the service of the UE is the same as the slice information in the data collection and reporting configuration information. If the updated slice information is the same as the slice information in the data collection and reporting configuration information, UE-side data of the service is collected and reported. If the updated slice information is different from the slice information in the data collection and reporting configuration information, UE-side data of the service is not collected or reported.

Step 706 is the same as step 605.

According to the foregoing solution, after selecting a corresponding slice, the data collection network element sends slice information of the slice to the UE, and data collection and reporting is triggered only when the service runs on the slice corresponding to the slice information. In this way, data collection and reporting of the specified slice is implemented, and per-slice QoE collection is implemented. This helps an operator perform network optimization such as dynamic slice resource management and slice selection and adjustment, and provides better service experience for a user.

FIG. 8 is a schematic flowchart of a data collection method according to an embodiment of this application. The method includes the following steps.

Step 801 is the same as step 601.

Step 802: A data collection network element sends a subscription request or a query request to a PCF. Correspondingly, the PCF receives the subscription request or the query request.

The subscription request or the query request includes identification information of a service, identification information of UE, and indication information.

The service refers to a service corresponding to an application identifier in data collection configuration information in step 801. The identification information of the service may be an application identifier or flow description information of the service, and the identification information of the service is used by the PCF to determine the service.

The indication information indicates the PCF to determine slice information corresponding to the service of the UE.

Optionally, the subscription request is sent to the PCF, and the subscription request further includes notification condition information such as a subscription periodicity or event triggering, and indicates when or in what case the PCF notifies the data collection network element of the slice information corresponding to the service.

If the data collection configuration information includes indication information, the data collection network element determines, based on the indication information, slice information on which per-slice QoE measurement needs to be performed, to perform step 802. That is, the indication information triggers the data collection network element to determine the slice information on which QoE measurement needs to be performed, to perform step 802. If the data collection configuration information does not include indication information, the data collection network element determines, based on a requirement of the data collection network element, slice information on which per-slice QoE measurement needs to be performed, to perform step 802.

It should be noted that there is no clear time sequence relationship among step 802 to step 804 and other steps. Step 802 to step 804 may be performed at any time before step 808.

Step 803: The PCF determines the slice information corresponding to the service.

Specifically, the PCF determines, based on the flow description information, a PDU session in which the service is located, and further determines slice information corresponding to the PDU session. The slice information is slice information corresponding to the flow description information, that is, the slice information corresponding to the service.

Step 804: The PCF sends a notification message or a query response message to the data collection network element. Correspondingly, the data collection network element receives the notification message or the query response message.

The notification message or the query response message includes the slice information corresponding to the service.

Alternatively, the notification message or the query response message includes the identification information of the service and the slice information corresponding to the service. In other words, the notification message or the query response message includes a correspondence between the slice information and the service.

The data collection network element may determine, based on the notification message or the query response message, the slice information corresponding to the service, that is, determine the correspondence between the service and slice information. For example, it is determined that a service 1 corresponds to slice information 1.

Based on step 802 to step 804, the data collection network element may determine slice information separately corresponding to each service on the UE, that is, determine a slice used by the service of the UE.

Step 805: The data collection network element sends data collection and reporting configuration information to the UE. Correspondingly, the UE receives the data collection and reporting configuration information.

The data collection and reporting configuration information is generated by the data collection network element based on the data collection configuration information received from an application service provider, and the data collection and reporting configuration information includes to-be-collected QoE information and a reporting trigger condition. For example, the to-be-collected QoE information includes one or more of an average throughput, a buffer level, an initial play delay, a quantity of stalling times, and stalling time. The reporting trigger condition includes a reporting periodicity, a reporting trigger event, or the like.

In an implementation method, when the embodiment of FIG. 8 is applied to the architecture shown in FIG. 3 or FIG. 4, the data collection and reporting configuration information in step 805 may be sent to the MSH in the UE as a part of the foregoing described SAI, and then the MSH collects UE data (that is, QoE information). For a process of sending the SAI, refer to the foregoing descriptions. Alternatively, the data collection network element (that is, the 5GMS AF or the 5GMSd AF) actively sends the data collection and reporting configuration information to the MSH of the UE through the M5 interface or the M5d interface, or the data collection network element (that is, the 5GMS AF or the 5GMSd AF) sends the data collection and reporting configuration information to the MSH of the UE through the M5 interface or the M5d interface based on a request of the MSH of the UE.

Step 806: The UE measures and collects data of the service based on the data collection and reporting configuration information, and generates a measurement report.

The measurement report includes QoE information of the service, and the QoE information includes one or more of the average throughput, the buffer level, the initial play delay, the quantity of stalling times, and the stalling time.

In an implementation method, when the embodiment of FIG. 8 is applied to the architecture shown in FIG. 4, step 806 may be specifically: The MSH of the UE configures, based on the data collection and reporting configuration information, the media player (MP) to collect data, and reports the collected UE data (that is, QoE information) to the MSH. Subsequently, the MSH may report the collected QoE information to the data collection network element (that is, the 5GMSd AF).

Step 807: The UE sends the measurement report to the data collection network element based on the data collection and reporting configuration information.

For example, the UE may periodically send the measurement report to the data collection network element based on the reporting periodicity in the data collection and reporting configuration information.

For another example, the UE may send the measurement report to the data collection network element based on the reporting trigger event in the data collection and reporting configuration information when the reporting trigger event is met. For example, when a metric reaches a threshold, the reporting trigger event is met. For another example, when the service ends, the reporting trigger event is met.

Step 808: The data collection network element determines per-slice QoE based on the measurement report and the correspondence between the service and the slice information.

After receiving the measurement report, the data collection network element may determine the service corresponding to the measurement report, and then determine, based on the correspondence that is between the service and the slice information and that is determined in step 802 to step 804, the slice information corresponding to the measurement report, to determine a correspondence between QoE information and slice information in each measurement report.

For example, the data collection network element receives a measurement report 1 and a measurement report 2 from UE 1, and receives a measurement report 3 and a measurement report 4 from UE 2. The measurement report 1 includes QoE information 1 of a service 1, the measurement report 2 includes QoE information 2 of a service 2, the measurement report 3 includes QoE information 3 of a service 3, and the measurement report 4 includes QoE information 4 of a service 4. Service types of the service 1, the service 2, the service 3, and the service 4 are the same. For example, the services are all streaming media services. For example, the service 1 and the service 2 are Tencent videos, and the service 3 and the service 4 are iQIYI videos. Therefore, service types of the service 1, the service 2, the service 3, and the service 4 are the same, that is, the services are all streaming media services. The data collection network element determines, according to step 802 to step 804, that both the service 1 and the service 3 correspond to slice information 1, and both the service 2 and the service 4 correspond to slice information 2. In this case, the data collection network element may determine QoE of a slice 1 based on the QoE information 1 and the QoE information 3, and determine QoE of a slice 2 based on the QoE information 2 and the QoE information 4. In this case, QoE quality of experience of such streaming media services in the slice 1 and the slice 2 may be obtained.

For another example, the data collection network element receives a measurement report 1 from UE 1, receives a measurement report 2 from UE 2, receives a measurement report 3 from UE 3, and receives a measurement report 4 from UE 4. The measurement report 1 includes QoE information 1 of a service 1, the measurement report 2 includes QoE information 2 of the service 1, the measurement report 3 includes QoE information 3 of the service 1, and the measurement report 4 includes QoE information 4 of the service 1. The data collection network element determines, according to step 802 to step 804, that both the service 1 on the UE 1 and the service 1 on the UE 3 correspond to slice information 1, and both the service 1 on the UE 2 and the service 1 on the UE 4 correspond to slice information 2. In this case, the data collection network element may determine quality of experience QoE of the service 1 in a slice 1 based on the QoE information 1 and the QoE information 3, and determine quality of experience of the service 1 in a slice 2 based on the QoE information 2 and the QoE information 4. For example, the service 1 is a Tencent video or an iQIYI video.

Subsequently, the data collection network element may provide per-slice QoE for another network element, to perform a network optimization operation such as dynamically adjusting slice resources or indicating the UE to perform slice adjustment. For example, if quality of experience of a slice is poor, a resource quantity of the slice may be increased, to improve the quality of experience of the slice. For another example, if quality of experience of a slice is poor, UE using the slice may be notified to hand over a service of the UE to another slice with good quality of experience.

According to the foregoing solution, the data collection network element interacts with the PCF in a core network, to obtain the correspondence between the service and the slice information. After receiving the measurement report of the service subsequently, the data collection network element may determine a correspondence between the measurement report and the slice information based on the correspondence between the service and the slice information and a correspondence between the service and the measurement report, and associate the slice information with the measurement report, to implement per-slice QoE collection. This helps an operator perform network optimization such as dynamic slice resource management and slice selection and adjustment, and provides better service experience for a user.

It may be understood that, to implement the functions in the foregoing embodiments, the terminal device or the data collection network element includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

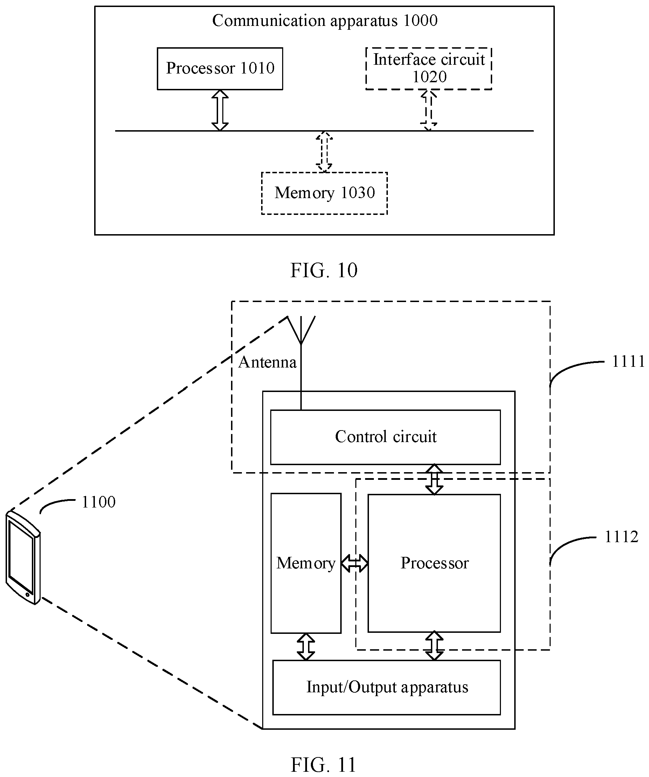

FIG. 9 and FIG. 10 are diagrams of structures of possible communication apparatuses according to embodiments of this application. The communication apparatuses may be configured to implement functions of the terminal device or the data collection network element in the foregoing method embodiments. Therefore, the communication apparatuses can also implement beneficial effects of the foregoing method embodiments. In embodiments of this application, the communication apparatus may be a terminal device or a data collection network element, or may be a module (for example, a chip) used in the terminal device or the data collection network element.

As shown in FIG. 9, a communication apparatus 900 includes a processing unit 910 and a transceiver unit 920. The communication apparatus 900 is configured to implement functions of the terminal device or the data collection network element in the foregoing method embodiments.

In a first embodiment, the communication apparatus is configured to perform an operation performed by the data collection network element in the foregoing method embodiments. The transceiver unit 920 is configured to receive, from a terminal device, terminal device-side data of a service and slice information corresponding to the service. The processing unit 910 is configured to determine, based on the slice information and the terminal device-side data of the service, terminal device-side data corresponding to the slice information.

In a possible implementation method, the transceiver unit 920 is further configured to send first indication information to the terminal device, where the first indication information indicates to report the slice information corresponding to the service, or the first indication information indicates to collect and report the slice information corresponding to the service.

In a possible implementation method, the transceiver unit 920 is further configured to receive the first indication information from an application service provider; or the transceiver unit 920 is further configured to: receive second indication information from an application service provider, and determine the first indication information based on the second indication information, where the second indication information indicates to report the slice information corresponding to the service, or the second indication information indicates to collect and report the slice information corresponding to the service.

In a possible implementation method, the transceiver unit 920 is further configured to send the slice information to the terminal device.

In a possible implementation method, the transceiver unit 920 is further configured to receive second indication information from an application service provider, where the second indication information indicates to report the slice information corresponding to the service, or the second indication information indicates to collect and report the slice information corresponding to the service. The processing unit 910 is further configured to determine the slice information based on the second indication information.

In a possible implementation method, the transceiver unit 920 is further configured to receive third indication information from the application service provider, where the third indication information indicates to collect the per-slice terminal device-side data.

In a second embodiment, the communication apparatus is configured to perform an operation performed by the terminal device in the foregoing method embodiments. The processing unit 910 is configured to: receive a data collection metric of a service from a data collection network element by using the transceiver unit 920, where the data collection metric indicates to-be-collected terminal device-side data of the service; and send, to the data collection network element by using the transceiver unit 920, the terminal device-side data of the service and slice information corresponding to the service.

In a possible implementation method, the slice information and the terminal device-side data of the service are used to determine terminal device-side data corresponding to the slice information.

In a possible implementation method, the processing unit 910 is further configured to: receive, by using the transceiver unit 920, first indication information from the data collection network element, where the first indication information indicates to report the slice information corresponding to the service, or the first indication information indicates to collect and report the slice information corresponding to the service; and determine, based on the first indication information, the slice information corresponding to the service.

In a possible implementation method, the processing unit 910 is further configured to receive the slice information from the data collection network element by using the transceiver unit 920.

In a third embodiment, the communication apparatus is configured to perform an operation performed by the data collection network element in the foregoing method embodiments. The transceiver unit 920 is configured to: send slice information and a data collection metric of a service to a terminal device, where the data collection metric indicates to-be-collected terminal device-side data of the service; and receive the terminal device-side data of the service from the terminal device, where the service corresponds to the slice information. The processing unit 910 is configured to determine, based on the slice information and the terminal device-side data of the service, terminal device-side data corresponding to the slice information.

In a possible implementation, the transceiver unit 920 is further configured to receive, from the terminal device, first slice information that carries the service, where the first slice information is included in the slice information.

In a possible implementation, the transceiver unit 920 is further configured to receive indication information from an application service provider, where the indication information indicates to collect the per-slice terminal device-side data.

In a possible implementation method, the processing unit 910 is further configured to determine the slice information based on the indication information.

In a possible implementation method, the terminal device-side data includes quality of experience.

In a fourth embodiment, the communication apparatus is configured to perform an operation performed by the terminal device in the foregoing method embodiments. The transceiver unit 920 is configured to receive slice information and a data collection metric of a service from a data collection network element, where the data collection metric indicates to-be-collected terminal device-side data of the service. The processing unit 910 is configured to: determine that the slice information corresponding to the service, and send the terminal device-side data of the service to the data collection network element by using the transceiver unit 920.

In a possible implementation method, the transceiver unit 920 is specifically configured to: when first slice information that carries the service is included in the slice information, send the terminal device-side data of the service to the data collection network element.

In a possible implementation method, the transceiver unit 920 is further configured to send, to the data collection network element, the first slice information that carries the service.

In a possible implementation method, the terminal device-side data of the service is used to determine terminal device-side data corresponding to the slice information.

In a possible implementation method, the terminal device-side data includes quality of experience.

In a fifth embodiment, the communication apparatus is configured to perform an operation performed by the data collection network element in the foregoing method embodiments. The transceiver unit 920 is configured to receive terminal device-side data of a service from a terminal device. The processing unit 910 is configured to determine, based on a correspondence between the service and slice information and the terminal device-side data of the service, terminal device-side data corresponding to the slice information.

In a possible implementation method, the transceiver unit 920 is further configured to receive indication information from an application service provider, where the indication information indicates to collect the per-slice terminal device-side data.

In a possible implementation method, the transceiver unit 920 is further configured to receive the correspondence between the service and slice information from a policy control network element.

In a possible implementation method, the terminal device-side data includes quality of experience.

For more detailed descriptions of the processing unit 910 and the transceiver unit 920, directly refer to related descriptions in the foregoing method embodiments. Details are not described herein again.

As shown in FIG. 10, a communication apparatus 1000 includes a processor 1010. In an implementation method, the communication apparatus 1000 further includes an interface circuit 1020, and the processor 1010 and the interface circuit 1020 are coupled to each other. It may be understood that the interface circuit 1020 may be a transceiver or an input/output interface. In an implementation method, the communication apparatus 1000 may further include a memory 1030, configured to: store instructions executed by the processor 1010, store input data needed by the processor 1010 to run the instructions, or store data generated after the processor 1010 runs the instructions.

When the communication apparatus 1000 is configured to implement the foregoing method embodiments, the processor 1010 is configured to implement a function of the processing unit 910, and the interface circuit 1020 is configured to implement a function of the transceiver unit 920.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

FIG. 11 is a diagram of a structure of a terminal device. The terminal device is applicable to any one of the foregoing method embodiments, and the terminal device is configured to perform an operation performed by the UE in the foregoing method embodiments. For ease of description, FIG. 11 shows only main components of the terminal device. As shown in FIG. 11, the terminal device 1100 includes a processor, a memory, a control circuit, an antenna, and an input/output apparatus. The processor is mainly configured to: process a communication protocol and communication data, control the entire terminal device, execute a software program, and process data of the software program. The memory is mainly configured to store a software program and data. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user, and output data to the user.

After the terminal device is powered on, the processor may read the software program in the memory, parse and execute instructions of the software program, and process the data of the software program. When data needs to be sent in a wireless manner, the processor performs baseband processing on the to-be-sent data, and outputs a baseband signal to the control circuit. The control circuit processes the baseband signal to obtain a radio frequency signal, and sends the radio frequency signal to the outside in a form of an electromagnetic wave through the antenna. When data is sent to the terminal device, the control circuit receives the radio frequency signal through the antenna. The radio frequency signal is further converted into a baseband signal, and the baseband signal is output to the processor. The processor converts the baseband signal into data, and processes the data.

For ease of description, FIG. 11 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to improve a processing capability of the terminal device, and components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In an example, the antenna and the control circuit that have a transceiver function may be considered as a transceiver unit 1111 of the terminal device 1100, and the processor that has a processing function may be considered as a processing unit 1112 of the terminal device 1100. As shown in FIG. 11, the terminal device 1100 includes the transceiver unit 1111 and the processing unit 1112. The transceiver unit may also be referred to as a transceiver, a transceiver machine, a transceiver apparatus, or the like. Optionally, a component that is in the transceiver unit 1111 and that is configured to implement a receiving function may be considered as a receiving unit, and a component that is in the transceiver unit 1111 and that is configured to implement a sending function may be considered as a sending unit. That is, the transceiver unit 1111 includes the receiving unit and the sending unit. For example, the receiving unit may also be referred to as a receiver, a receiver machine, a receiving circuit, or the like, and the sending unit may also be referred to as a transmitter, a transmitter machine, or a transmitting circuit. Optionally, the receiving unit and the sending unit may be one integrated unit, or may be a plurality of independent units. The receiving unit and the sending unit may be at one geographical location, or may be distributed at a plurality of geographical locations.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or instructions are loaded and executed on a computer, all or some of the procedures or the functions in embodiments of this application are executed. The computer may be a general-purpose computer, a dedicated computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or nonvolatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data collection method, comprising:
receiving, from a terminal device, terminal device-side data of a service and slice information corresponding to the service; and
determining, based on the slice information and the terminal device-side data of the service, terminal device-side data corresponding to the slice information.

2. The method according to claim 1, wherein the method further comprises:
sending first indication information to the terminal device, wherein the first indication information indicates to report the slice information corresponding to the service.

3. The method according to claim 2, wherein the method further comprises:
receiving the first indication information from an application service provider; or
receiving second indication information from an application service provider, and determining the first indication information based on the second indication information, wherein the second indication information indicates to report the slice information corresponding to the service.

4. The method according to claim 1, wherein the method further comprises:
sending the slice information to the terminal device.

5. The method according to claim 4, wherein the method further comprises:
receiving second indication information from an application service provider, wherein the second indication information indicates to report the slice information corresponding to the service; and
determining the slice information based on the second indication information.

6. The method according to any one of claims 1 to 5, wherein the method further comprises:
receiving third indication information from the application service provider, wherein the third indication information indicates to collect the per-slice terminal device-side data.

7. The method according to any one of claims 1 to 6, wherein the terminal device-side data comprises quality of experience.

8. A data collection method, comprising:
receiving a data collection metric of a service from a data collection network element, wherein the data collection metric indicates to-be-collected terminal device-side data of the service; and
sending, to the data collection network element, the terminal device-side data of the service and slice information corresponding to the service.

9. The method according to claim 8, wherein the slice information and the terminal device-side data of the service are used to determine terminal device-side data corresponding to the slice information.

10. The method according to claim 8 or 9, wherein the method further comprises:
receiving first indication information from the data collection network element, wherein the first indication information indicates to report the slice information corresponding to the service; and
determining, based on the first indication information, the slice information corresponding to the service.

11. The method according to claim 8 or 9, wherein the method further comprises:
receiving the slice information from the data collection network element.

12. The method according to any one of claims 8 to 11, wherein the terminal device-side data comprises quality of experience.

13. A data collection method, comprising:
sending slice information and a data collection metric of a service to a terminal device, wherein the data collection metric indicates to-be-collected terminal device-side data of the service;
receiving the terminal device-side data of the service from the terminal device, wherein the service corresponds to the slice information; and
determining, based on the slice information and the terminal device-side data of the service, terminal device-side data corresponding to the slice information.

14. The method according to claim 13, wherein the method further comprises:
receiving, from the terminal device, first slice information that carries the service, wherein the first slice information is comprised in the slice information.

15. The method according to claim 13 or 14, wherein the method further comprises:
receiving indication information from an application service provider, wherein the indication information indicates to collect the per-slice terminal device-side data.

16. The method according to any one of claims 13 to 15, wherein the method further comprises:
determining the slice information based on the indication information.

17. The method according to any one of claims 13 to 16, wherein the terminal device-side data comprises quality of experience.

18. A data collection method, comprising:
receiving slice information and a data collection metric of a service from a data collection network element, wherein the data collection metric indicates to-be-collected terminal device-side data of the service; and
sending the terminal device-side data of the service to the data collection network element, wherein the service corresponds to the slice information.

19. The method according to claim 18, wherein the sending the terminal device-side data of the service to the data collection network element comprises:
when first slice information that carries the service is comprised in the slice information, sending the terminal device-side data of the service to the data collection network element.

20. The method according to claim 18 or 19, wherein the method further comprises:
sending, to the data collection network element, the first slice information that carries the service.

21. The method according to any one of claims 18 to 20, wherein the terminal device-side data of the service is used to determine terminal device-side data corresponding to the slice information.

22. The method according to any one of claims 18 to 21, wherein the terminal device-side data comprises quality of experience.

23. A communication apparatus, comprising a module configured to perform the method according to any one of claims 1 to 7, a module configured to perform the method according to any one of claims 8 to 12, a module configured to perform the method according to any one of claims 13 to 17, or a module configured to perform the method according to any one of claims 18 to 22.

24. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement, through a logical circuit or by executing code instructions, the method according to any one of claims 1 to 7, the method according to any one of claims 8 to 12, the method according to any one of claims 13 to 17, or the method according to any one of claims 18 to 22.

25. A computer program product, comprising a computer program, wherein when the computer program is executed by a communication apparatus, the method according to any one of claims 1 to 7, the method according to any one of claims 8 to 12, the method according to any one of claims 13 to 17, or the method according to any one of claims 18 to 22 is implemented.

26. A computer-readable storage medium, wherein the storage medium stores a computer-readable program or instructions; and when the computer program or the instructions are executed by a communication apparatus, the method according to any one of claims 1 to 7, the method according to any one of claims 8 to 12, the method according to any one of claims 13 to 17, or the method according to any one of claims 18 to 22 is implemented.
